# EUROPÄISCHE PATENTSCHRIFT

(11) **EP 3 555 464 B1**
(45) Veröffentlichungstag und Bekanntmachung des Hinweises auf die Patenterteilung: **02.09.2020**
(21) Anmeldenummer: 17816522.1
(22) Anmeldetag: 27.11.2017
(51) Int. Cl.: F03D 13/10, F03D 7/02, F03D 80/00

(54) **ROTORARRETIERVORRICHTUNG FÜR EINE WINDENERGIEANLAGE UND VERFAHREN**
ROTOR ARRESTING DEVICE FOR A WIND TURBINE AND METHOD
DISPOSITIF D'ARRÊT DE ROTOR POUR UNE ÉOLIENNE ET PROCÉDÉ ASSOCIÉ

(30) Priorität: 14.12.2016 DE 102016124379
(43) Veröffentlichungstag der Anmeldung: 23.10.2019
(73) Patentinhaber: Wobben Properties GmbH, 26607 Aurich (DE)
(72) Erfinder: GIENGIEL, Wojciech, 26607 Aurich (DE); RÖER, Jochen, 27777 Ganderkesee (DE)
(74) Vertreter: Eisenführ Speiser
(86) Internationale Anmeldenummer: PCT/EP2017/080530
(87) Internationale Veröffentlichungsnummer: WO 2018/108506

(56) Entgegenhaltungen:
- EP-A1- 2 495 435
- EP-A1- 2 927 479
- EP-A2- 1 167 754

## Beschreibung

Die Erfindung betrifft eine Rotorarretiervorrichtung für eine Windenergieanlage, eine Windenergieanlage sowie ein Verfahren zum Arretieren und/oder Drehen eines Rotors einer Windenergieanlage.

Eine Windenergieanlage wandelt die Energie des Windes in elektrische Energie um. Die dominierende Bauform von Windenergieanlagen ist die dreiblättrige HorizontalachsenWindenergieanlage, bei der sich im Betrieb der Rotor auf der Luvseite befindet und deren Maschinenhaus auf einem Turm angeordnet ist und der Windrichtung aktiv nachgeführt wird.

Der aerodynamische Rotor der Windenergieanlage umfasst vorzugsweise ein, zwei oder mehrere Rotorblätter, die vorzugsweise an einer gemeinsamen Nabe befestigt sind. Diese Nabe ist ferner vorzugsweise drehsteif mit einer Rotationsbaugruppe verbunden. Bei Windenergieanlagen mit einem Direktantrieb, das heißt ohne ein Getriebe zur Übersetzung, treibt der Rotor beispielsweise über die Nabe und einen Achszapfen einen Generatorrotor an. Die Rotationsbaugruppe umfasst bei Windenergieanlagen mit Getriebe in der Regel ferner eine Rotorwelle, welche den Rotor und ein Getriebe miteinander verbindet. Somit wird die Drehbewegung des Rotors durch das Getriebe in eine Getriebeabtriebsbewegung umgewandelt, so dass anschließend diese Getriebeabtriebsbewegung wiederum an einen Generator übertragen werden kann.

Als Rotor wird im Sinne dieser Anmeldung der aerodynamische Rotor einer Windenergieanlage mit in der Regel drei Rotorblättern verstanden. Als Generatorrotor wird im Sinne dieser Anmeldung ein elektrodynamischer Rotor eines Generators verstanden, vorzugsweise eines Generators für eine Windenergieanlage. Ein Generator im Sinne dieser Anmeldung umfasst sowohl Innenläufergeneratoren, bei denen ein Generatorrotor radial innerhalb eines Stators rotiert, als auch Außenläufergeneratoren, bei denen ein Generatorrotor radial außerhalb um einen Stator rotiert. Der aerodynamische Rotor einer Windenergieanlage ist in verschiedenen Situationen zu arretieren, wobei es ferner bevorzugt ist, dass der Rotor in einer spezifischen Drehposition arretiert wird.

Beispielsweise kann es erforderlich sein, dass der Rotor arretiert wird, um Reparatur- und/oder Wartungsarbeiten, beispielsweise im Inneren der Gondel oder im Bereich der Nabe, durchzuführen. Ferner kann es erforderlich werden, den Rotor zu arretieren, sobald die Windenergieanlage montiert und/oder demontiert wird. Beispielsweise entstehen hohe Arretierkräfte und/oder Arretiermomente zum Halten eines Rotors in einer definierten Position, wenn nicht alle vorgesehenen Rotorblätter angeordnet sind und sich der Rotor somit in einer labilen Position befindet. Dies ist insbesondere in der zweckmäßigen und sogenannten Sechs-Uhr-Position notwendig, indem ein Nabenanschlussbereich, an dem kein Rotorblatt angeordnet ist, in Richtung des Fundamentes der Windenergieanlage zeigt und die vorzugsweise bereits montierten zwei weiteren Rotorblätter teilweise in eine entgegengesetzte Richtung mit ihrer Längsachse zeigen. Dadurch bewirken die nicht gleichmäßig um eine Rotationsachse angeordneten Rotorblätter ein hohes Drehmoment in Bezug auf diese Rotationsachse.

Sobald die vorherrschende Windgeschwindigkeit die maximale Windgeschwindigkeit für die Windenergieanlage überschreitet, kann es ferner vorteilhaft sein, nicht nur den Anstellwinkel der Rotorblätter zu verändern, um den Rotor abzubremsen, sondern den Rotor der Windenergieanlage zum Stillstand zu bringen, also auf eine Drehzahl von Null abzubremsen und im Anschluss derart zu arretieren, dass der Rotor an einer Drehung gehindert ist. Ferner ist es häufig erforderlich, dass der Rotor mit einer hohen Präzision in einer gewünschten Position arretiert wird, sodass positionsabhängige Reparaturen und/oder Wartungsarbeiten und/oder Montagearbeiten durchgeführt werden können.

Im Stand der Technik bekannte Rotorarretiervorrichtungen haben insbesondere das Ziel, eine sichere Arretierung bereitzustellen. Dies erklärt sich insbesondere dadurch, dass durch entsprechende Sicherheitsvorkehrungen für an der Windenergieanlage arbeitende Personen gesorgt sein sollte. Daher sind bei im Stand der Technik bekannten Rotorarretiervorrichtungen vornehmlich Kombinationen aus Bolzen und vorzugsweise mehreren Öffnungen vorgesehen. Ferner vorzugsweise sind an einem Generatorrotor eines Generators, insbesondere an einem Rotorträger, Öffnungen angeordnet, deren Durchtrittsrichtung vorzugsweise im Wesentlichen parallel zu einer Rotationsachse des Generators angeordnet ist. Am Generatorstator, insbesondere an einem Statorträger, sind vorzugsweise zu den Öffnungen korrespondierende Bolzen angeordnet, die in den Öffnungen angeordnet werden können. Durch die Anordnung der Bolzen innerhalb der Öffnungen kann eine Arretierung des Generatorrotors und somit auch des aerodynamischen Rotors erreicht werden.

Eine im Vorherigen genannte und beschriebene Rotorarretiervorrichtung kann zwar einerseits eine sichere Arretierung des Rotors bereitstellen, allerdings ist eine Positionierung des Rotors nur auf den Positionen möglich, an denen Öffnungen an der Rotationsbaugruppe vorgesehen sind. Ferner ist es beispielsweise zur Montage von Rotorblättern erforderlich, nach der Montage eines ersten Rotorblatts die Arretierung zu lösen, um den Rotor in die Position für die Montage des zweiten Rotorblatts, vorzugsweise in eine Sechs-Uhr-Position, zu drehen und dort abermals zu arretieren. Dies resultiert in verschiedensten Anwendungsbereichen in hohen Kosten und einem großen Aufwand. Die existierenden Systeme und Verfahren zum Arretieren von Windenergieanlagenrotoren bieten zwar verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 100 31 472 C1, DE 10 2008 063 043 B4, DE 10 2008 054 100 A1 und DE 21 2013 000 242 U1. Ein weiteres Dokument aus dem Stand der Technik ist EP 2 927 479 A1.

Es ist daher eine Aufgabe der vorliegenden Erfindung, eine Lösung bereitzustellen, welche einen oder mehrere der genannten Nachteile vermindert oder beseitigt. Ferner ist es eine Aufgabe der vorliegenden Erfindung, eine Lösung bereitzustellen, welche eine kostengünstigere und/oder einfachere Montage und/oder Wartung und/oder Reparatur einer Windenergieanlage ermöglicht. Darüber hinaus ist es eine Aufgabe der vorliegenden Erfindung, eine Lösung bereitzustellen, welche die Arretierung einer Windenergieanlage verbessert und/oder vereinfacht.

Gemäß einem ersten Aspekt der vorliegenden Erfindung wird die eingangs genannte Aufgabe gelöst durch eine Rotorarretiervorrichtung für eine Windenergieanlage mit einem Rotor, einer mit dem Rotor drehsteif verbundenen Rotationsbaugruppe und einer relativ zur Rotationsbaugruppe ortsfesten Standbaugruppe, umfassend eine an der Rotationsbaugruppe anordenbare Zahnscheibe, mit einer entlang eines Umfangs angeordneten Mehrzahl an Arretierausnehmungen, wobei zwei benachbarte Arretierausnehmungen einen Zahn ausbilden, ein erstes Arretiermodul mit mindestens einem ersten Arretierelement, ein zweites Arretiermodul mit mindestens einem zweiten Arretierelement, wobei das erste Arretiermodul und das zweite Arretiermodul an der Standbaugruppe anordenbar sind, wobei das erste Arretierelement und das zweite Arretierelement angeordnet und ausgebildet sind, in Arretierausnehmungen der Zahnscheibe einzugreifen, wobei in Umfangsrichtung der Zahnscheibe der Abstand des mindestens einen ersten Arretierelements von dem mindestens einen zweiten Arretierelement ein nicht ganzzahliges Vielfaches eines Zahnspitzenabstands der Zahnscheibe beträgt.

Die Rotationsbaugruppe ist drehsteif mit dem Rotor verbunden. Wenn nicht explizit anders beschrieben, ist unter einem Rotor die Baugruppe umfassend mindestens ein Rotorblatt, eine Nabe, an der das mindestens eine Rotorblatt angeordnet ist, zu verstehen. Oft weist der Rotor auch einen Spinner auf. Die Rotationsbaugruppe kann beispielsweise einen Rotorträger und/oder einen Achszapfen und/oder eine Rotorwelle umfassen, welcher bzw. welche drehsteif mit der Rotornabe verbunden ist. Vorzugsweise kann die Rotationsbaugruppe auch einen Generatorrotor umfassen. Ferner vorzugsweise umfasst die Rotationsbaugruppe jegliches Bauteil, das mittels einer Drehung des Rotors ebenfalls in eine Drehbewegung versetzt wird.

Neben der Rotationsbaugruppe umfasst eine Windenergieanlage eine Standbaugruppe, welche gegenüber der Rotationsbaugruppe ortsfest ist. Die Standbaugruppe umfasst insbesondere derartige Elemente, die innerhalb der Gondel angeordnet sind und die um eine Rotationsachse des Rotors keine Rotationsbewegung ausführen. Die Standbaugruppe ist somit gegenüber der Rotationsbaugruppe ortsfest. Gegenüber dem Turm und/oder dem Fundament der Windenergieanlage ist die Standbaugruppe zusammen mit der Gondel in der Regel jedoch um eine im Wesentlichen vertikale Achse drehbar, da Windenergieanlagen in der Regel eine Windrichtungsnachführung aufweisen, sodass die Gondel um eine Achse parallel zur Längsachse des Turmes rotieren kann. Somit rotiert auch die Standbaugruppe, welche innerhalb der Gondel angeordnet ist, gegenüber einem Punkt außerhalb der Gondel, insbesondere gegenüber dem Boden, auf dem die Windenergieanlage errichtet ist. Ortsfest ist im Sinne dieser Anmeldung in Bezug auf die rotierende Rotationsbaugruppe zu verstehen. Die Standbaugruppe umfasst beispielsweise einen Generatorstator, einen Achszapfen, einen Maschinenträger, ein Generatorgehäuse oder ein Getriebegehäuse. Ferner vorzugsweise umfasst die Standbaugruppe ein Element, an dem die Arretiermodule anordenbar sind.

Die an der Rotationsbaugruppe anordenbare Zahnscheibe weist entlang eines Umfangs eine Mehrzahl an Arretierausnehmungen auf. Die Zahnscheibe kann entweder ein eigens für die Rotorarretierung vorgesehenes Element, das drehsteif an der Rotationsbaugruppe angeordnet ist, sein, oder alternativ kann die Zahnscheibe auch an einem bekannten Element der Rotationsbaugruppe angeordnet sein. Beispielsweise kann die Zahnscheibe ein Teil einer Generatorrotorscheibe sein, indem die Generatorrotorscheibe entlang eines Umfangs angeordnete Arretierausnehmungen aufweist. Durch die Mehrzahl an Arretierausnehmungen entlang des Umfangs der Zahnscheibe wird eine Verzahnung ausgebildet.

Die Verzahnung kann beispielsweise ein Wellenprofil aufweisen, das sich dadurch auszeichnet, dass die Ausnehmungen und/oder die Zähne eine teilkreisförmige, insbesondere halbkreisförmige, Geometrie aufweisen. Ferner vorzugsweise kann die Verzahnung eine Evolventen- und/oder Zykloidenverzahnung aufweisen. Darüber hinaus kann auch eine Sägezahnverzahnung vorgesehen werden. Die Arretierausnehmungen bzw. die durch die Arretierausnehmungen ausgebildeten Zähne müssen jedoch eine derartige Geometrie aufweisen, dass das mindestens eine erste Arretierelement und das mindestens eine zweite Arretierelement, trotz des erfindungsgemäßen Abstandes dieser zwei Arretierelemente zueinander, stets in einer der Arretierausnehmungen anordenbar sind. Insbesondere sind die Arretierelemente bzw. die Arretierausnehmungen derart zu gestalten, dass beim Bewegen eines Arretierelements in eine Arretierausnehmung gegebenenfalls eine Scherbewegung stattfindet, sodass durch das Bewegen der Zahnscheibe eine Anordnung eines Arretierelements bzw. eines Abschnitts eines Arretierelements in einer Arretierausnehmung ermöglicht wird.

Das mindestens eine erste Arretierelement ist an dem ersten Arretiermodul angeordnet. Das erste Arretierelement erstreckt sich vorzugsweise von einem Modulende zu einem Eingriffsende. Mit dem Modulende ist das erste Arretierelement vorzugsweise an und/oder in dem ersten Arretiermodul angeordnet. Vorzugsweise ist das erste Arretierelement an dem ersten Arretiermodul derart angeordnet, dass das erste Arretierelement relativ zum Arretiermodul bewegt werden kann. Das Eingriffsende des ersten Arretierelements ist vorzugsweise dem Arretiermodul abgewandt und im Betriebszustand der Zahnscheibe zugewandt. Vorzugsweise weist ein Bereich angrenzend an das Eingriffsende eine Geometrie auf, welche eine Negativgeometrie der Arretierausnehmungen darstellt. Ferner vorzugsweise weist ein Bereich angrenzend an das Eingriffsende eine Geometrie auf, die zumindest teilweise eine Negativgeometrie der Arretierausnehmungen darstellt. Insbesondere ist ein Bereich angrenzend an das Eingriffsende derart ausgebildet, sodass beim Hineinführen eines Arretierelements in eine Arretierausnehmung, welches nicht exakt mittig erfolgt, eine Scherbewegung und somit auch eine Scherkraft, insbesondere in tangentialer Richtung der Zahnscheibe, entsteht. Somit kann vorzugsweise gewährleistet werden, dass im Falle einer nicht exakt mittigen Einführung eines Arretierelements in eine Arretierausnehmung eine inkrementelle Bewegung der Zahnscheibe bzw. des Rotors erfolgt und somit das Arretierelement durch diese inkrementelle Bewegung dann mittig eingreift und eine sichere Rotorarretierung gewährleistet werden kann. Ferner resultiert diese Anordnung des ersten Arretierelements darin, dass auf die mit der Zahnscheibe verbundene Baugruppe eine Scherkraft ausgeübt und eine Drehung dieser Baugruppe relativ zu dem ersten Arretierelement ermöglicht werden kann. Im Falle einer Anordnung der Baugruppe an einer Rotationsbaugruppe einer Windenergieanlage kann somit eine Drehung der Rotationsbaugruppe bzw. des Rotors ermöglicht werden.

Diese Ausführungen gelten im Wesentlichen analog für das zweite Arretiermodul und das mindestens eine zweite Arretierelement.

Das erste Arretiermodul und das zweite Arretiermodul sind erfindungsgemäß an einer Standbaugruppe einer Windenergieanlage anordenbar. Das erste Arretiermodul und das zweite Arretiermodul sind vorzugsweise und im Wesentlichen nicht in Rotationsrichtung der Rotationsbaugruppe beweglich. Vorzugsweise ist bzw. sind das mindestens eine erste Arretierelement und/oder das mindestens eine zweite Arretierelement ebenfalls bezüglich einer Rotationsrichtung der Rotationsbaugruppe fest angeordnet. Insbesondere ist diese feste Anordnung des mindestens einen ersten Arretierelements und/oder des mindestens einen zweiten Arretierelements an dem ersten Arretiermodul bzw. dem zweiten Arretiermodul derart gestaltet, dass diese in Arretierausnehmungen der Zahnscheibe eingreifen können. Zu diesem Zweck sind die Arretierelement an den Arretiermodulen vorzugsweise in Richtung der Zahnscheibe bewegbar angeordnet. Darüber hinaus besteht die Möglichkeit, dass die Arretierelemente an den Arretiermodulen fest angeordnet sind, jedoch die Arretiermodule mit den fest an diesen angeordneten Arretierelementen in Richtung der Zahnscheibe beweglich ausgebildet sind.

Unter einem Eingreifen eines Arretierelements in eine Arretierausnehmung ist insbesondere zu verstehen, dass das Arretierelement derart in der Arretierausnehmung der Zahnscheibe angeordnet ist, dass die Zahnscheibe weder in eine erste Drehrichtung noch in eine zweite Drehrichtung bewegbar ist. Unberücksichtigt bleiben bei dieser Definition eventuell notwendige Kräfte zum Arretieren, sodass eventuell auch das Eingreifen von zwei oder mehreren Arretierelementen vollständig in mehreren Arretierausnehmungen notwendig ist, um eine sichere Rotorarretierung zu gewährleisten.

In Umfangsrichtung der Zahnscheibe weist das mindestens eine erste Arretierelement von dem mindestens einen zweiten Arretierelement einen Abstand auf, der ein nicht ganzzahliges Vielfaches eines Zahnspitzenabstands der Zahnscheibe beträgt. Ein Zahnspitzenabstand ist insbesondere als der Abstand zu verstehen, den zwei Zahnhochpunkte von zwei benachbarten Zähnen aufweisen. Bei einer homogenen Verzahnung ist dieser Zahnspitzenabstand entlang der gesamten Zahnscheibe konstant. Darüber hinaus können auch Zahnscheiben vorgesehen werden, deren Verzahnung nicht konstant ist. Bei einer derartigen Verzahnung besteht zusätzlich die Möglichkeit, dass Zahnspitzenabstandsbereiche definiert werden, wobei die Zahnspitzenabstandsbereiche jeweils vorzugsweise einen konstanten Zahnspitzenabstand aufweisen. Darüber hinaus kann der Zahnspitzenabstand durch das Vorsehen einzelner größerer Zähne abschnittsweise nicht konstant sein.

Durch die Beabstandung des mindestens einen ersten Arretierelements und des mindestens einen zweiten Arretierelements wird deutlich, dass das mindestens eine erste Arretierelement und das mindestens eine zweite Arretierelement nicht gleichzeitig vollständig in eine Arretierausnehmung eingreifen können. Im Falle, dass das mindestens eine erste Arretierelement vollständig in eine Arretierausnehmung eingreift, greift das mindestens eine zweite Arretierelement nicht vollständig in eine weitere Arretierausnehmung ein. Jedoch ist ein teilweises Eingreifen des mindestens einen zweiten Arretierelements in eine Arretierausnehmung möglich. In dieser Situation kann das zweite Arretierelement weiter in Richtung der Zahnscheibe bewegt werden und somit in Richtung einer Eingriffsposition. Durch eine entsprechende Ausbildung der Arretierausnehmung und der Arretierelemente bzw. deren Eingriffsbereiche erfolgt eine Scherbewegung, sodass sich die Zahnscheibe und somit auch die Verzahnung tangential bewegt, sodass das mindestens eine zweite Arretierelement vollständig in eine Arretierausnehmung eingreifen kann. Es erschließt sich, dass durch das vollständige Eingreifen des mindestens einen zweiten Arretierelements in eine Arretierausnehmung sowie durch die tangentiale Bewegung der Zahnscheibe das mindestens eine erste Arretierelement nicht mehr vollständig in der zuvor angeordneten Arretierausnehmung angeordnet sein kann. Das mindestens eine erste Arretierelement wird in dieser Situation entweder kraftlos geschaltet und durch die Bewegung der Zahnscheibe ebenfalls durch eine Scherbewegung aus der Eingriffsposition heraus gedrängt, oder alternativ wird das mindestens ein erstes Arretierelement aktiv zurückgezogen beispielsweise mittels eines Antriebs.

Unter einer Windenergieanlage wird vorliegend insbesondere eine Horizontalachsenwindenergieanlage verstanden, die insbesondere dadurch gekennzeichnet ist, dass der Rotor im Betrieb eine Fläche überstreicht, die im Wesentlichen vertikal zur Erdoberfläche ausgerichtet ist, und eine Rotorachse aufweist, die im Wesentlichen eine horizontale Ausrichtung aufweist. Solche Windenergieanlagen werden auch als Horizontalachsen-Windenergieanlagen bezeichnet. Ferner wird unter einer Windenergieanlage insbesondere eine Windenergieanlage mit einer Nennleistung von mehr als 500 kW, und/oder mehr als 1000 kW, und/oder mehr als 1500 kW, und/oder mehr als 2000 kW, und/oder mehr als 2500 kW, und/oder mehr als 3000 kW, und/oder mehr als 3500 kW, und/oder mehr als 4000 kW, und/oder mehr als 4500 kW, und/oder mehr als 5000 kW, und/oder mehr als 5500 kW, und/oder mehr als 6000 kW verstanden.

Der Erfindung liegt die Erkenntnis zugrunde, dass das im Stand der Technik bekannte Arretieren in vielen Fällen nicht ausreichend ist, um eine gewünschte Position des Rotors zu erreichen. Durch eine Verzahnung an einer Zahnscheibe, welche drehsteif mit einer Rotationsbaugruppe verbunden ist, sowie Arretierelemente, die in diese Verzahnung eingreifen können, welche wiederum fest an einer Standbaugruppe angeordnet sind, kann die Auflösung einer Drehpositionierung deutlich verbessert werden. Ferner liegt der Erfindung die Erkenntnis zugrunde, dass durch entsprechend geformte Arretierelemente und korrespondierend ausgebildete Arretierausnehmungen eine Scherkraft zwischen der Zahnscheibe und den Arretierelementen in tangentialer Richtung der Zahnscheibe erzielt werden kann, sodass eine inkrementelle Drehung der Zahnscheibe durch das Einführen, insbesondere das nicht mittige Einführen, eines Arretierelements in eine Arretierausnehmung ermöglicht wird. Ferner kann durch die erfindungsgemäße Rotorarretiervorrichtung die Notwendigkeit einer Haltbremse reduziert oder auf eine Haltebremse verzichtet werden. Darüber hinaus wird das häufig notwendige Trudeln bzw. der Trudelbetrieb weitestgehend durch die Möglichkeit der gezielten Drehung unnötig. Es wird ferner die Montage der Rotorblätter an dem Rotor vereinfacht indem beispielsweise auf einen Ballast- oder Bananenarm verzichtet werden könnte. Ferner kann die Notwendigkeit eines weiteren Generators zum Drehen des Rotors reduziert oder vermieden werden.

In einer bevorzugten Ausführungsvariante der Rotorarretiervorrichtung ist vorgesehen, dass das mindestens eine erste Arretierelement und/oder das mindestens eine zweite Arretierelement einen Eingriffsbereich aufweist bzw. aufweisen und der Eingriffsbereich eine Negativgeometrie von einer der Arretierausnehmungen aufweist, sodass der Eingriffsbereich des ersten Arretierelements und/oder des zweiten Arretierelements vorzugsweise vollständig in einer der Arretierausnehmungen anordenbar ist bzw. sind.

Der Eingriffsbereich ist vorzugsweise angrenzend an das Eingriffsende der Arretierelemente angeordnet. In einer Ausgestaltung der Zahnscheibe und der Arretierelemente weisen die Zähne eine dreieckige Geometrie auf, die zwischen zwei Zähnen angeordnete Arretierausnehmung weist ebenfalls eine dreieckige Geometrie auf, welche vorzugsweise die gleichen Abmessungen hat wie die dreieckige Geometrie eines Zahns, und vorzugsweise hat der Eingriffsbereich wiederum die gleiche Geometrie wie einer der Zähne. Dadurch hat der Eingriffsbereich auch eine Negativgeometrie der Arretierausnehmungen und kann somit in diesen in einer Eingriffsposition angeordnet werden.

Eine weitere bevorzugte Fortbildung der Rotorarretiervorrichtung zeichnet sich dadurch aus, dass die Breite der Arretierausnehmungen in Umfangsrichtung in radialer und/oder axialer Richtung von einem Kopfkreisdurchmesser zu einem Fußkreisdurchmesser hin abnimmt, wobei diese Abnahme vorzugsweise stetig erfolgt. Der Kopfkreisdurchmesser wird gebildet durch das Verbinden der Zahnspitzen der Verzahnung. Der Fußkreisdurchmesser verbindet vorzugsweise die Tiefpunkte der Arretierausnehmungen miteinander. Die abnehmende Breite der Arretierausnehmungen vom Kopfkreisdurchmesser hin zum Fußkreisdurchmesser resultiert in einer guten Scherwirkung, sobald ein geeignet ausgebildetes Arretierelement in eine Arretierausnehmung eingreift.

Gemäß einer weiteren bevorzugten Ausführungsvariante der Rotorarretiervorrichtung ist vorgesehen, dass die Arretierausnehmungen eine homogene Verzahnung ausbilden, die insbesondere einen konstanten Zahnspitzenabstand aufweist. Es ist ferner bevorzugt, dass die Zahnscheibe Bereiche aufweist, die einen konstanten Zahnspitzenabstand aufweisen. Diese Bereiche können beispielsweise an Drehpositionen der Zahnscheibe vorgesehen werden, in denen eine präzise Positionierung des Rotors wünschenswert ist. Ferner ist vorzugsweise vorgesehen, dass das mindestens eine erste Arretierelement beweglich an dem ersten Arretiermodul angeordnet ist und/oder das mindestens eine zweite Arretierelement beweglich an dem zweiten Arretiermodul angeordnet ist. In dieser Ausführungsvariante kann bzw. können das erste Arretiermodul und/oder das zweite Arretiermodul fest an der Standbaugruppe angeordnet werden. Durch die feste Anordnung des ersten und/oder zweiten Arretiermoduls an der Standbaugruppe sowie die bewegliche Anordnung der Arretierelemente an den Arretiermodulen kann eine besonders vorteilhafte Ausbildung der Rotorarretiervorrichtung bereitgestellt werden. Die Arretiermodule können bei dieser Ausführungsvariante die Stabilität und Festigkeit der Rotorarretiervorrichtung gewährleisten, währenddessen die Arretierelemente, welche beweglich an den Arretiermodulen angeordnet sind, die erforderliche Bewegung bereitstellen.

In einer bevorzugten Ausführungsvariante der Rotorarretiervorrichtung ist vorgesehen, dass das mindestens eine erste Arretierelement und das mindestens eine zweite Arretierelement relativ zueinander, vorzugsweise in Umfangsrichtung und/oder radialer Richtung und/oder axialer Richtung der Rotationsbaugruppe, bewegbar angeordnet sind. In dieser bevorzugten Ausführungsvariante ist es insbesondere möglich, die Arretierelemente in tangentialer Richtung der Zahnscheibe relativ zueinander zu bewegen. Hier können auch ein erstes Arretierelement und ein zweites Arretierelement vollständig in eine Arretierausnehmung eingreifen. Eine weitere Ausführungsvariante sieht vorzugsweise vor, dass das erste Arretiermodul und/oder das zweite Arretiermodul beweglich an der Standbaugruppe anordenbar ist bzw. sind, so dass auch die Arretierelemente zueinander beweglich sind.

Eine weitere bevorzugte Fortbildung der Rotorarretiervorrichtung zeichnet sich dadurch aus, dass das erste Arretiermodul und/oder das zweite Arretiermodul ausgebildet ist bzw. sind, das mindestens eine erste Arretierelement und/oder das mindestens eine zweite Arretierelement in Eingriffsrichtung von einer Bereitschaftsposition in eine Eingriffsposition zu bewegen, wobei vorzugsweise das mindestens eine erste Arretierelement und/oder das mindestens eine zweite Arretierelement in der Bereitschaftsposition nicht in eine der Arretierausnehmungen eingreift bzw. eingreifen und in der Eingriffsposition in eine der Arretierausnehmungen eingreift bzw. eingreifen. Wenn sich die Arretierelemente in einer Bereitschaftsposition befinden, kann die Zahnscheibe eine Rotationsbewegung ausführen, ohne von den Arretierelementen an dieser Rotationsbewegung gehindert zu werden. Insbesondere besteht kein unmittelbarer Kontakt zwischen einem der Arretierelemente und der Zahnscheibe, wenn sich die Arretierelemente in der Bereitschaftsposition befinden. Von der Bereitschaftsposition können die Arretierelemente jedoch in die Eingriffsposition bewegt werden.

Ferner ist vorzugsweise vorgesehen, dass die Eingriffsrichtung des mindestens einen ersten Arretierelements und/oder des mindestens einen zweiten Arretierelements in radialer Richtung und/oder in axialer Richtung einer Rotationsachse der Rotationsbaugruppe gerichtet ist. Wenn die Eingriffsrichtung des mindestens einen ersten Arretierelements und/oder des mindestens einen zweiten Arretierelements in radialer Richtung der Rotationsachse der Rotationsbaugruppe gerichtet ist, ist die Zahnscheibe vorzugsweise als eine außenverzahnte Zahnscheibe vorgesehen. Dies bedeutet insbesondere, dass die Verzahnung an einem Außenumfang der Zahnscheibe angeordnet ist. Darüber hinaus besteht die Möglichkeit einer radialen Eingriffsrichtung, wenn die Arretierausnehmungen bzw. Zähne der Zahnscheibe von radialer Richtung aus für ein Arretierelement erreichbar sind. Eine Eingriffsrichtung des mindestens einen ersten Arretierelements und/oder des mindestens einen zweiten Arretierelements in axialer Richtung der Rotationsachse der Rotationsbaugruppe ist bevorzugt vorgesehen, wenn die Zahnscheibe eine Verzahnung an einer Stirnseite aufweist. Darüber hinaus besteht die Möglichkeit einer axialen Eingriffsrichtung, wenn die Arretierausnehmungen bzw. Zähne der Zahnscheibe von axialer Richtung aus für ein Arretierelement erreichbar sind.

In einer besonders bevorzugten Ausführungsvariante der Rotorarretiervorrichtung ist vorgesehen, dass eine Zahnhöhe der Zähne der Zahnscheibe parallel und/oder radial zur Rotationsachse der Rotationsbaugruppe ausgerichtet ist. Die Zahnhöhe eines Zahnes erstreckt sich vorzugsweise von seiner Zahnspitze bis zu einem Mittelpunkt an seinem Zahnfuß.

Gemäß einer weiteren bevorzugten Ausführungsvariante der Rotorarretiervorrichtung ist vorgesehen, dass diese eine Anzahl an Arretierausnehmungen von 45 bis 720, insbesondere von 90 bis 360, umfasst.

Eine weitere bevorzugte Fortbildung der Rotorarretiervorrichtung zeichnet sich dadurch aus, dass das erste Arretiermodul und/oder das zweite Arretiermodul an einem Tragrahmen und/oder einem Grundträger und/oder einem Generatorstator, insbesondere an einem Statorträger, und/oder einem Maschinenträger und/oder einer Lagervorrichtung der Hauptwelle anordenbar ist bzw. sind. Ferner ist vorzugsweise vorgesehen, dass die Zahnscheibe an einem Generatorrotor und/oder an einer Rotorscheibe und/oder an einer Hauptwelle und/oder an einer Antriebsseite eines Getriebes und/oder an einer Abtriebsseite eines Getriebes anordenbar ist.

Es ist ferner bevorzugt, dass die Rotorarretiervorrichtung eine Steuerungsvorrichtung umfasst, die angeordnet und ausgebildet ist, das mindestens eine erste Arretierelement in Eingriffsrichtung in eine Eingriffsposition zu bewegen, sodass die Zahnscheibe durch den Eingriff des mindestens einen ersten Arretierelements in eine der Arretierausnehmungen in mindestens einer Drehrichtung, vorzugsweise in beide Drehrichtungen, arretiert wird. Diese Arretierung insbesondere in beide Drehrichtungen kann beispielsweise dadurch erreicht werden, dass das Arretierelement vollständig in einer Arretierausnehmung angeordnet ist. Die Steuerungsvorrichtung ist vorzugsweise ebenfalls angeordnet und ausgebildet, das mindestens eine zweite Arretierelement in Eingriffsrichtung in eine Eingriffsposition zu bewegen, sodass die Zahnscheibe durch den Eingriff des mindestens einen zweiten Arretierelements in eine der Arretierausnehmungen in mindestens einer Drehrichtung, vorzugsweise in beide Drehrichtungen, arretiert wird.

Eine weitere besonders bevorzugte Ausführungsvariante der Rotorarretiervorrichtung umfasst eine Steuerungsvorrichtung, die angeordnet und ausgebildet ist, das mindestens eine zweite Arretierelement in Eingriffsrichtung in eine Eingriffsposition zu bewegen, wobei das mindestens eine erste Arretierelement derart in eine Bereitschaftsposition bewegt wird, dass die Zahnscheibe während der Bewegung des ersten Arretierelements und des zweiten Arretierelements stets in beide Drehrichtungen arretiert ist. Durch die Beabstandung des ersten Arretierelements und des zweiten Arretierelements arretieren vorzugsweise die ersten Arretierelemente die Zahnscheibe in eine erste Drehrichtung, und die zweiten Arretierelemente arretieren die Zahnscheibe in eine zweite Drehrichtung, die der ersten Drehrichtung entgegengesetzt ist, sobald eines der Arretierelemente in die Eingriffsposition hineingefahren wird und die jeweils anderen Arretierelemente in eine Bereitschaftsposition herausgefahren werden.

Gemäß einem weiteren Aspekt der vorliegenden Erfindung wird die eingangs genannte Aufgabe gelöst durch eine Windenergieanlage mit einer Gondel, einer Rotationsbaugruppe und einer Standbaugruppe, umfassend eine Rotorarretiervorrichtung nach mindestens einer der im Vorhergehenden beschriebenen Ausführungsvarianten.

Gemäß einem weiteren Aspekt der vorliegenden Erfindung wird die eingangs genannte Aufgabe gelöst durch ein Verfahren zum Arretieren und/oder Drehen eines Rotors einer Windenergieanlage, insbesondere einer Windenergieanlage gemäß dem vorherigen Aspekt, umfassend Bereitstellen einer Rotorarretiervorrichtung nach mindestens einer der im Vorhergehenden beschriebenen Ausführungsvarianten, Bewegen des mindestens einen ersten Arretierelements, das angeordnet und ausgebildet ist, in einer Arretierausnehmung einer Zahnscheibe einzugreifen, in Eingriffsrichtung in eine Eingriffsposition, sodass die Zahnscheibe durch den Eingriff des mindestens einen ersten Arretierelements in eine der Arretierausnehmungen in mindestens einer Drehrichtung, vorzugsweise in beide Drehrichtungen, arretiert wird.

Eine weitere bevorzugte Fortbildung des Verfahrens umfasst dieses die Schritte Bewegen des mindestens einen zweiten Arretierelements, das angeordnet und ausgebildet ist, in eine der Arretierausnehmungen der Zahnscheibe einzugreifen, in Eingriffsrichtung in eine Eingriffsposition, sodass die Zahnscheibe durch den Eingriff des mindestens einen zweiten Arretierelements in eine der Arretierausnehmungen in mindestens einer Drehrichtung, vorzugsweise in beide Drehrichtungen, arretiert wird, Bewegen des mindestens einen ersten Arretierelements in eine Bereitschaftsposition, in der das mindestens eine erste Arretierelement nicht in eine der Arretierausnehmungen der Zahnscheibe eingreift, wobei das Bewegen des ersten Arretierelements und das Bewegen des zweiten Arretierelements derart erfolgt, dass die Zahnscheibe während dieser Bewegungen in mindestens einer Drehrichtung, vorzugsweise in beiden Drehrichtungen, arretiert ist. Durch diese Arretierung kann gewährleistet werden, dass die Rotationsbaugruppe, an der die Zahnscheibe angeordnet ist, während des Drehens nicht trudelt bzw. sich unkontrolliert zwischen zwei Drehpositionen bewegt.

Gemäß einem weiteren Aspekt der vorliegenden Erfindung wird die eingangs genannte Aufgabe gelöst durch ein Verfahren zum Arretieren und/oder Drehen eines Rotors einer Windenergieanlage, insbesondere einer Windenergieanlage gemäß dem vorhergehenden Aspekt, umfassend Bereitstellen einer Rotorarretiervorrichtung nach mindestens einer der im Vorhergehenden beschriebenen Ausführungsvarianten mit einem dritten Arretiermodul mit einem dritten Arretierelement, wobei das erste Arretiermodul ein erstes Arretierelement und das zweite Arretiermodul ein zweites Arretierelement umfassen, wobei das zweite Arretierelement benachbart zum ersten Arretierelement und das dritte Arretierelement benachbart zum zweiten Arretierelement angeordnet ist, und wobei die Zahnscheibe zumindest einen ersten Zahn, einen zu diesem benachbart angeordneten zweiten Zahn, einen zu diesem benachbart angeordneten dritten Zahn, einen zu diesem benachbart angeordneten vierten Zahn, einen zu diesem benachbart angeordneten fünften Zahn, und einen zu diesem benachbart angeordneten sechsten Zahn umfasst, Bewegen des ersten Arretierelements in eine Eingriffsposition zwischen dem ersten Zahn und dem zweiten Zahn, und Bewegen des zweiten Arretierelements an eine dem zweiten Zahn abgewandte Zahnflanke des dritten Zahns, Bewegen des zweiten Arretierelements in eine Eingriffsposition zwischen dem dritten Zahn und dem vierten Zahn, wobei das zweite Arretierelement eine Schwerbewegung an der dem zweiten Zahn abgewandten Zahnflanke des dritten Zahns ausführt, passives oder aktives Bewegen des ersten Arretierelements an einer dem ersten Zahn zugewandten Zahnflanke des zweiten Zahns und Bewegen des dritten Arretierelements an eine dem vierten Zahn abgewandten Zahnflanke des fünften Zahns, Bewegen des dritten Arretierelements in eine Eingriffsposition zwischen dem fünften Zahn und dem sechsten Zahn, wobei das dritte Arretierelement eine Schwerbewegung an der dem vierten Zahn abgewandten Zahnflanke des fünften Zahns ausführt, passives oder aktives Bewegen des zweiten Arretierelements an einer dem dritten Zahn zugewandten Zahnflanke des vierten Zahns und Bewegen des ersten Arretierelements in eine Bereitschaftsposition.

Bei einer beabsichtigten weiteren Drehung der Zahnscheibe umfasst das Verfahren im Anschluss an die oben beschriebenen Verfahrensschritte vorzugsweise ferner die Schritte Bewegen des ersten Arretierelements in eine Eingriffsposition zwischen dem zweiten Zahn und dem dritten Zahn, wobei das erste Arretierelement eine Schwerbewegung an der dem ersten Zahn abgewandten Zahnflanke des zweiten Zahns ausführt, und passives oder aktives Bewegen des dritten Arretierelements an einer dem fünften Zahn zugewandten Zahnflanke des sechsten Zahns, und Bewegen des zweiten Arretierelements in eine Bereitschaftsposition.

Das erfindungsgemäße Verfahren und seine möglichen Fortbildungen weisen Merkmale bzw. Verfahrensschritte auf, die sie insbesondere dafür geeignet machen, für eine erfindungsgemäße Rotorarretiervorrichtung und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Rotorarretiervorrichtung verwiesen.

Bevorzugte Ausführungsformen der Erfindung werden beispielhaft anhand der beiliegenden Figuren erläutert. Es zeigen:
- Fig. 1:: eine schematische Ansicht einer Windenergieanlage;
- Fig. 2a:: eine schematische Ansicht einer beispielhaften Ausführungsform einer Rotorarretiervorrichtung:
- Fig. 2b:: eine schematische Ansicht einer weiteren beispielhaften Ausführungsform einer Rotorarretiervorrichtung mit tangential bewegbaren Arretiermodulen;
- Fig. 3:: eine schematische dreidimensionale Ansicht einer beispielhaften Ausführungsform eines Generators mit drei Rotorarretiervorrichtungen;
- Fig. 4a:: eine schematische Ansicht einer beispielhaften Ausführungsform einer außenverzahnten Zahnscheibe;
- Fig. 4b:: eine schematische Teilansicht einer beispielhaften Ausführungsform einer Rotorarretiervorrichtung mit außenverzahnter Zahnscheibe gemäß Figur 4a mit einer Sägezahnverzahnung;
- Fig. 4c:: eine schematische Teilansicht einer beispielhaften Ausführungsform einer Rotorarretiervorrichtung mit außenverzahnter Zahnscheibe gemäß Figur 4a mit einer Wellenverzahnung;
- Fig. 5a:: eine schematische Ansicht einer beispielhaften Ausführungsform einer innenverzahnten Zahnscheibe;
- Fig. 5b:: eine schematische Teilansicht einer beispielhaften Ausführungsform einer Rotorarretiervorrichtung mit innenverzahnter Zahnscheibe gemäß Figur 5a mit einer Sägezahnverzahnung;
- Fig. 5c:: eine schematische Teilansicht einer beispielhaften Ausführungsform einer Rotorarretiervorrichtung mit innenverzahnter Zahnscheibe gemäß Figur 5a mit einer Wellenverzahnung;
- Fig. 6a:: eine schematische Ansicht einer beispielhaften Ausführungsform einer stirnseitig verzahnten Zahnscheibe;
- Fig. 6b:: eine schematische Teilansicht einer beispielhaften Ausführungsform einer Rotorarretiervorrichtung mit einer stirnseitig verzahnten Zahnscheibe gemäß Figur 6a mit einer Sägezahnverzahnung;
- Fig. 6c:: eine schematische Teilansicht einer beispielhaften Ausführungsform einer Rotorarretiervorrichtung mit einer stirnseitig verzahnten Zahnscheibe gemäß Figur 6a mit einer Sägezahnverzahnung;
- Fig. 7a:: einen schematischen Ausschnitt einer beispielhaften Ausführungsform einer Rotorarretiervorrichtung mit einem Arretierelement in einer Bereitschaftsposition;
- Fig. 7b:: einen schematischen Ausschnitt einer beispielhaften Ausführungsform einer Rotorarretiervorrichtung mit einem Arretierelement in einer Eingriffsposition;
- Fig. 8a:: eine schematische Teilansicht einer beispielhaften Ausführungsform einer Rotorarretiervorrichtung mit drei Arretierelementen in einer Bereitschaftsposition;
- Fig. 8b:: eine schematische Teilansicht einer beispielhaften Ausführungsform einer Rotorarretiervorrichtung mit Arretierelementen in teilweiser oder vollständiger Eingriffsposition;
- Fig. 9a:: eine schematische Ansicht einer beispielhaften Ausführungsform einer Zahnscheibe mit einer Sägezahnverzahnung und korrespondierendem Arretierelement;
- Fig. 9b:: eine schematische Ansicht einer beispielhaften Ausführungsform einer Zahnscheibe mit einer Wellenverzahnung und korrespondierendem Arretierelement; und
- Fig. 9c:: eine schematische Ansicht einer beispielhaften Ausführungsform einer Zahnscheibe mit einer Trapezverzahnung und korrespondierendem Arretierelement.
- Fig. 10a-e:: schematische Ansichten einer weiteren beispielhaften Ausführungsform einer beispielhaften Ausführungsform einer Rotorarretiervorrichtung mit drei Arretierelementen in verschiedenen Positionen eines Verfahrens zum Arretieren und/oder Drehen eines Rotors einer Windenergieanlage.

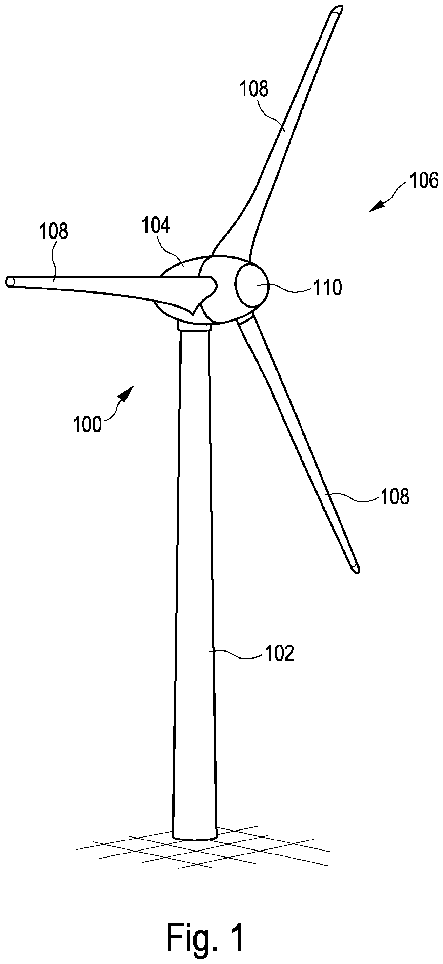

In den Figuren sind gleiche oder im Wesentlichen funktionsgleiche oder -ähnliche Elemente mit den gleichen Bezugszeichen bezeichnet. Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Die Windenergieanlage 100 gemäß Figur 1 weist vorzugsweise eine erfindungsgemäße Rotorarretiervorrichtung auf, um den Rotor 106 in einer im Wesentlichen beliebigen Drehposition zu arretieren. Beispielsweise kann es erforderlich werden, dass der Rotor derart positioniert wird, dass die Längsachse des Rotorblatts 108' parallel zur Längsachse des Turmes 102 ausgerichtet ist, um dieses zu demontieren.

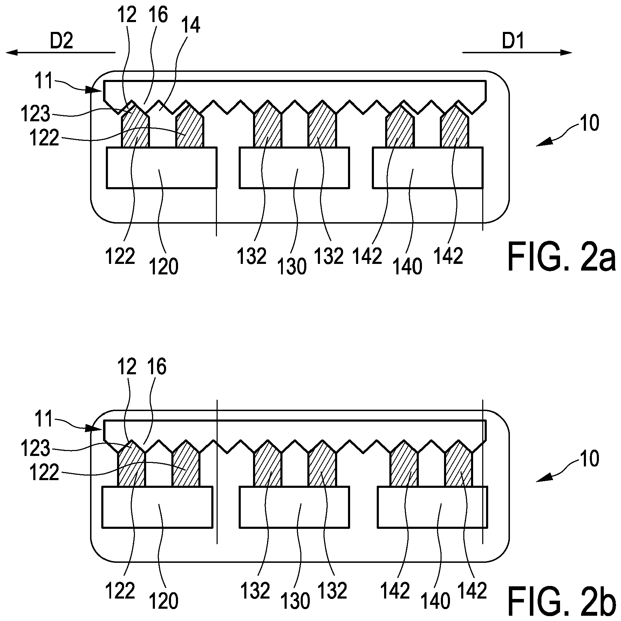

Die Figuren 2a und 2b zeigen jeweils eine Rotorarretiervorrichtung 10 mit einem ersten Arretiermodul 120, einem zweiten Arretiermodul 130 und einem dritten Arretiermodul 140. Darüber hinaus weist die Rotorarretiervorrichtung 10 eine Zahnscheibe 11 auf. Das erste Arretiermodul 120 weist zwei erste Arretierelemente 122 auf. Die ersten Arretierelemente 122 sind an der Seite des ersten Arretiermoduls 120 angeordnet, die der Verzahnung der Zahnscheibe 11 zugewandt ist. Ferner sind die ersten Arretierelemente 122 bewegbar an dem ersten Arretiermodul 120 angeordnet, insbesondere bewegbar in einer Richtung von dem ersten Arretiermodul 120 zu der Zahnscheibe 11 und in die entgegengesetzte Richtung. Analog zum ersten Arretiermodul 120 weist das zweite Arretiermodul 130 zweite Arretierelemente 132 auf. Das dritte Arretiermodul 140 weist ebenfalls zwei dritte Arretierelemente 142 auf. Die zweiten Arretierelemente 132 und die dritten Arretierelemente 142 sind jeweils an den Arretiermodulen analog zur Anordnung der ersten Arretierelemente an dem ersten Arretiermodul 120 angeordnet.

Die Zahnscheibe 11 weist eine Vielzahl von Arretierausnehmungen auf. Exemplarisch sind hier vorliegend die zwei benachbarten Arretierausnehmungen 12 und 14 mit einem Bezugszeichen gekennzeichnet, wobei die Arretierausnehmungen 12, 14 zwischen sich einen Zahn 16 ausbilden. Die Arretierausnehmungen 12, 14 an der Zahnscheibe 11 weisen eine Dreiecksform auf. Die Zähne 16 der Zahnscheibe 11 weisen ebenfalls eine Dreiecksform auf. Die ersten Arretierelemente 122 erstrecken sich von einem Modulende (nicht gezeigt) hin zu einem Eingriffsende 123. Das nicht gezeigte Modulende ist dem Arretiermodul 120 zugewandt. Das Eingriffsende 123 ist der Zahnscheibe 11 zugewandt. Ein Eingriffsbereich angrenzend an das Eingriffsende 123 des ersten Arretierelements 122 weist eine Dreiecksform auf, welche im Wesentlichen der Negativgeometrie der Arretierausnehmungen entspricht.

In Figur 2a ist die erfindungsgemäße Situation dargestellt, dass sich die zweiten Arretierelemente 132 in einer Eingriffsposition befinden. In der Eingriffsposition sind die Eingriffsbereiche angrenzend an die Eingriffsenden vollständig innerhalb der Arretierausnehmung angeordnet, so dass die Zahnscheibe im Wesentlichen keine Drehbewegung in einer ersten Tangentialrichtung D1 und/oder in einer zweiten Tangentialrichtung D1 ausführen kann. Ferner sind in dieser Situation die ersten Arretierelemente 122 und die dritten Arretierelemente 142 nicht vollständig innerhalb der Arretierausnehmungen angeordnet. Durch ein weiteres Hineinschieben der ersten Arretierelemente 122 sowie ein Kraftlosschalten und/oder aktives Zurückziehen der zweiten und dritten Arretierelemente 132, 142 würde sich die Zahnscheibe 11 durch die vollständige Positionierung der ersten Eingriffselemente 122 in einer Eingriffsposition tangential in eine erste Tangentialrichtung D1 drehen. Andererseits könnte die Zahnscheibe in einer der ersten Tangentialrichtung D1 entgegengesetzten zweiten Tangentialrichtung D2 gedreht werden, wenn in der gezeigten Situation in Figur 2a die dritten Arretierelemente 142 vollständig in den Arretierausnehmungen angeordnet werden würden.

Durch die Anordnung von drei Arretiermodulen mit jeweils mindestens einem Arretierelement kann somit, wie in Figur 2a gezeigt, eine Arretierung einer Zahnscheibe sowie das Drehen in zwei entgegengesetzte Richtungen D1, D2 realisiert werden. Die in Figur 2b gezeigte Ausführungsform unterscheidet sich von der in Figur 2a gezeigten Ausführungsform insbesondere dadurch, dass die ersten Arretierelemente von den zweiten und dritten Arretierelementen kein nicht ganzzahliges Vielfaches als Abstand aufweisen, sondern vielmehr einen Abstand, der ein ganzzahliges Vielfaches eines Zahnspitzenabstands der Zahnscheibe aufweist. Somit können in der Figur 2b die ersten, zweiten und dritten Arretierelemente 122, 132, 142 allesamt in einer Eingriffsposition angeordnet werden. Dieses ist beispielsweise möglich, indem die Arretiermodule 120, 130, 140 in tangentialer Richtung der Zahnscheibe bewegbar, vorzugsweise geringfügig bewegbar, ausgebildet sind. Ferner kann dies dadurch erreicht werden, dass die Arretierelemente an den Arretiermodulen derart bewegbar angeordnet sind, dass sich diese in Tangentialrichtungen D1, D2 bewegen können.

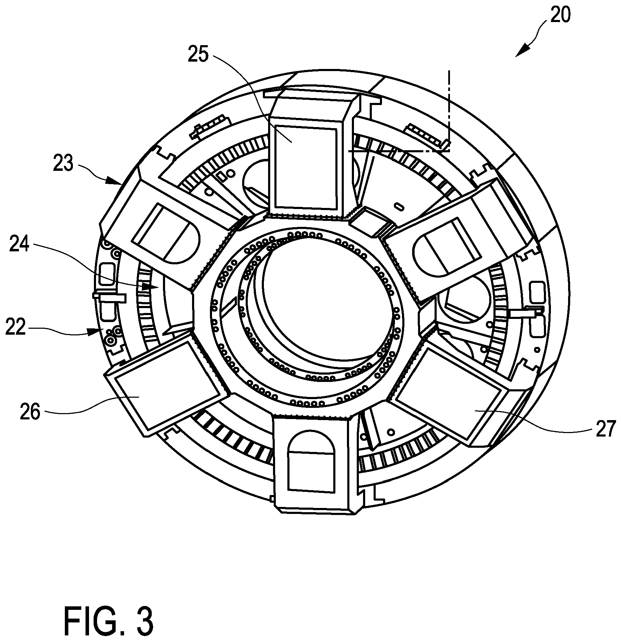

In Figur 3 ist eine mögliche Anordnung der Rotorarretiervorrichtung an einem Generator gezeigt. Der Generator 20 umfasst einen Generatorstator 22 und einen Generatorrotor 24, der mit einer Antriebswelle bzw. mit einem Bestandteil einer Rotationsbaugruppe einer Windenergieanlage drehsteif verbunden ist. Der Generatorstator 22 weist darüber hinaus eine drehsteif mit diesem verbundene Statorscheibe 23 auf. An der Statorscheibe 23 sind ein erstes Arretiermodul 25, ein zweites Arretiermodul 26 und ein drittes Arretiermodul 27 schematisch dargestellt. Die nicht dargestellten Arretierelemente erstrecken sich in Richtung einer Rotorscheibe, welche drehsteif mit dem Generatorrotor verbunden ist. An dem Generatorrotor 24 ist auch die Zahnscheibe angeordnet, welche die Arretierausnehmungen aufweist, in welche die Arretierelemente der Arretiermodule 25, 26, 27 eingreifen können, um die Zahnscheibe zu arretieren. Durch die drehsteife Verbindung der Zahnscheibe mit dem Generatorrotor 24 und dessen drehsteife Verbindung mit einer Rotationsbaugruppe, welche mit einem aerodynamischen Rotor, wie er beispielsweise in Figur 1 dargestellt ist, kann eine Arretierung der Rotationsbaugruppe bzw. des Rotors gewährleistet werden.

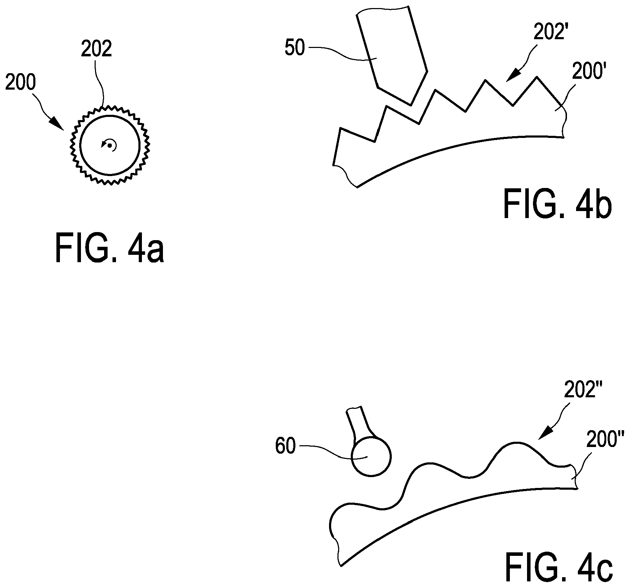

Die Figuren 4a, 4b und 4c zeigen eine mögliche Ausführungsform der Zahnscheibe 200 mit einer Verzahnung 202, welche auf einer radialen Umfangsfläche der Zahnscheibe 200 angeordnet ist. Die Verzahnung 202 kann auch als radiale Außenverzahnung bezeichnet werden. Die Zahnscheibe 200' in Figur 4b weist eine Dreiecksverzahnung 202' auf. Darüber hinaus ist ein zu dieser Dreiecksverzahnung 202' korrespondierendes Arretierelement 50 dargestellt. Das Arretierelement 50 weist einen dreiecksförmigen Eingriffsbereich auf, welcher im Wesentlichen eine Negativgeometrie der Arretierausnehmung der Verzahnung 202' ist. Ein derartiges Arretierelement 50 kann auch als Keilform bezeichnet werden. In Figur 4c ist eine Alternative zu der Ausführungsform in Figur 4b dargestellt, mit einer Zahnscheibe 200" und einer Verzahnung 202", die ein Wellenprofil bzw. eine Wellenverzahnung aufweist. Ein zu diesem Wellenprofil 202" korrespondierendes Arretierelement 60 weist einen Eingriffsbereich auf, welcher eine runde Geometrie aufweist. Ein derartiges Arretierelement kann beispielsweise die Geometrie einer Walze aufweisen, sodass in einem entsprechenden Querschnitt die zuvor genannte runde Geometrie zum Eingreifen in die Verzahnung 202" bereitgestellt werden kann.

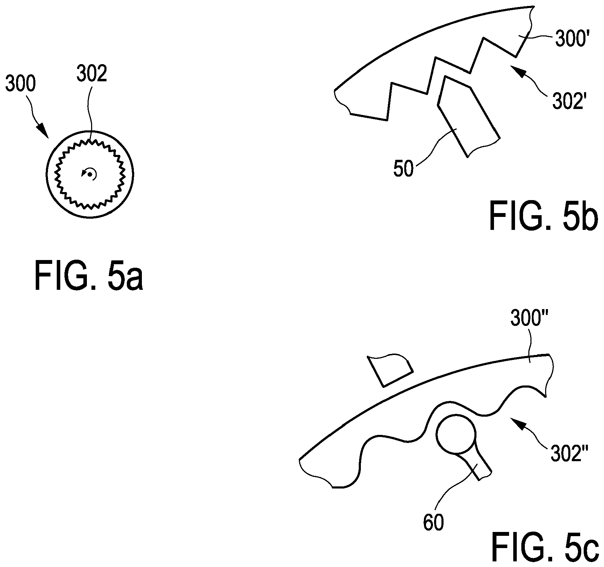

In den Figuren 5a, 5b und 5c sind Ausführungsformender Rotorarretiervorrichtung dargestellt, wie sie mit einer Zahnscheibe 300 möglich sind, wobei die Zahnscheibe 300 an einer radialen Innenumfangsfläche eine Verzahnung 302 aufweist. In Figur 5b ist gezeigt, wie ein keilförmiges Arretierelement 50 in eine derartige Innenverzahnung 302' einer Zahnscheibe 300' eingreifen kann. In Figur 5c ist gezeigt, wie ein walzenförmiges Arretierelement 60 mit einem kreisrunden Querschnitt in ein Wellenprofil 302" einer Zahnscheibe 300" eingreifen kann.

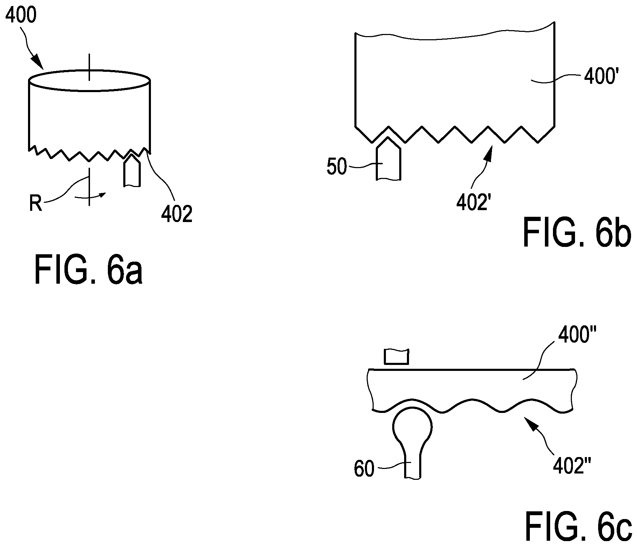

In den Figuren 6a, 6b und 6c sind Ausführungsformen dargestellt, in denen die Zahnscheibe 400 eine Verzahnung 402 an einer Stirnseite aufweist, sodass die Zahnhöhen der Verzahnung im Wesentlichen parallel zu einer Rotationsachse R der Rotationsscheibe 400 ausgerichtet sind. In Figur 6b ist die Ausführungsform dargestellt, wie ein keilförmiges Arretierelement 50 in die Verzahnung 402' der Zahnscheibe 400' eingreifen kann. In Figur 6c ist die Ausführungsform für eine Zahnscheibe 400" aufweisend eine Wellenverzahnung 402" mit einem walzenförmigen Arretierelement 60 dargestellt.

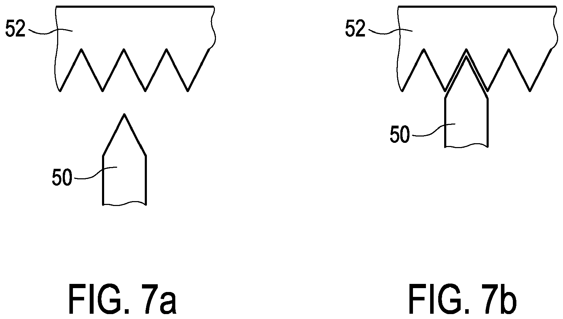

In den Figuren 7a und 7b ist der Unterschied zwischen einer Eingriffsposition und einer Bereitschaftsposition gezeigt. In Figur 7a ist dargestellt, wie ein keilförmiges Arretierelement 50 relativ zu einer Zahnscheibe 52 in einer Bereitschaftsposition angeordnet ist. In der Figur 7b ist gezeigt, wie die Zahnscheibe 52 und das Arretierelement 50 angeordnet sind, wenn sich das Arretierelement 50 in einer Eingriffsposition befindet.

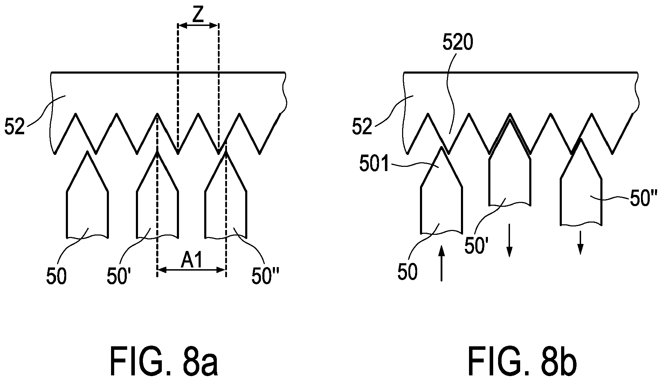

In den Figuren 8a und 8b sind die Bereitschaftspositionen bzw. Eingriffspositionen von keilförmigen Arretierelementen 50, 50', 50" gezeigt. Analog zu Figur 2a sind die Arretierelemente 50, 50', 50" mit einem nicht ganzzahligen vielfachen Zahnspitzenabstand Z beabstandet. Die Arretierelemente 50, 50', 50" sind jeweils mit einem Abstand A1 voneinander beabstandet, wobei der Abstand A1 ungleich dem Zahnspitzenabstand Z ist. Daher können nicht alle Arretierelemente 50, 50', 50" gleichzeitig in einer Eingriffsposition angeordnet werden. In Figur 8b ist eine Möglichkeit zum Drehen der Zahnscheibe 52 durch die Arretierelemente 50, 50', 50" dargestellt. Indem das Arretierelement 50 in Richtung der Zahnscheibe bewegt wird und eine Scherbewegung zwischen dem Eingriffsbereich 501 von Eingriffselement 50 und einem Zahn 520 der Zahnscheibe 52 erfolgt, wird die Zahnscheibe 52 hier vorliegend in Richtung der weiteren Arretierelemente 50, 50' gedreht. Um dies zu ermöglichen, werden die Arretierelemente 50' und 50" kraftlos geschaltet oder in eine entgegengesetzte Richtung von Arretierelement 50 bewegt, sodass diese die Zahnscheibe nicht weiter arretieren.

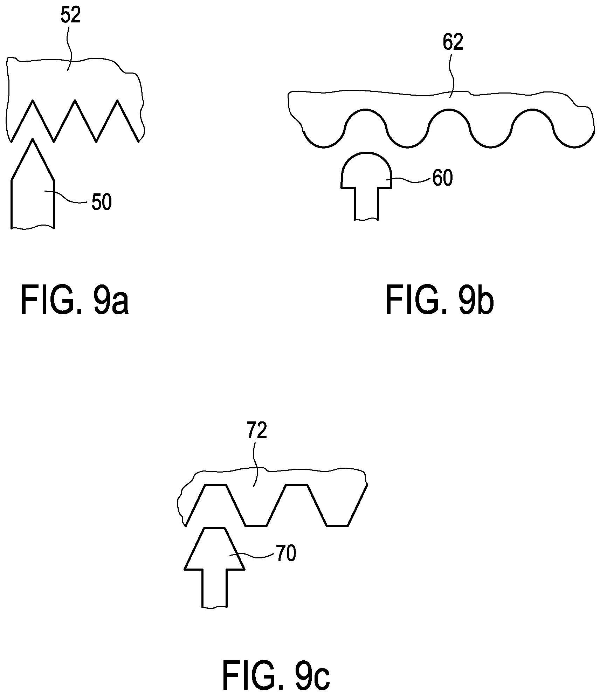

In den Figuren 9a, 9b und 9c sind unterschiedliche Ausführungsformen von Arretierelementen 50, 60, 70 dargestellt, welche in unterschiedlichen Situationen vorteilhafte Auswirkungen bewirken können. Bei dem Vorsehen von Arretierelementen 70 mit einem konusförmigen Eingriffsbereich gemäß Figur 9c ist bei der Anordnung der Arretierelemente bzw. der Ausbildung der Steuerungsvorrichtung zu gewährleisten, dass sich ein Arretierelement nicht in einer Zahn-auf-Zahn-Situation befindet, in der das Arretierelement auf einer Zahnspitze verweilt ohne durch eine Scherbewegung in eine Arretierausnehmung gelangen zu können. Die Ausführungsform in Figur 9b mit einem Arretierelement 60 hat den besonderen Vorteil, dass dieses eine geringe Möglichkeit zur Verklemmung aufweist.

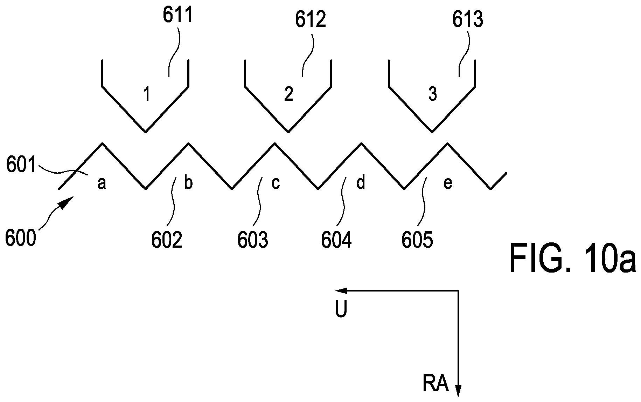

Die Figuren 10a-e zeigen schematische Ansichten einer weiteren beispielhaften Ausführungsform einer beispielhaften Ausführungsform einer Rotorarretiervorrichtung mit drei Arretierelementen in verschiedenen Positionen eines Verfahrens zum Arretieren und/oder Drehen eines Rotors einer Windenergieanlage. In einer in Figur 10a gezeigten ersten Anordnung befinden sich ein erstes Arretierelement 611, ein zweites Arretierelement 612 und ein drittes Arretierelement 613 in einer Bereitschaftsposition. In der Bereitschaftsposition sind die Arretierelemente 611, 612, 613 nicht in einer der Ausnehmungen einer Zahnscheibe 600 angeordnet. Die Ausnehmungen der Zahnscheibe 600 werden zumindest durch einen ersten Zahn 601, einen zu diesem benachbart angeordneten zweiten Zahn 602, einen zu diesem benachbart angeordneten dritten Zahn 603, einen zu diesem benachbart angeordneten vierten Zahn 604, einen zu diesem benachbart angeordneten fünften Zahn 605, und einen zu diesem benachbart angeordneten sechsten Zahn 606 ausgebildet. Die Zähne 601-606 weisen jeweils orthogonal zur Umfangsrichtung U und orthogonal zur radialen Richtung RA der Zahnscheibe 600 einen Querschnitt auf, wobei der Querschnitt die Geometrie eines gleichschenkligen Dreiecks aufweist. Die Höhe des gleichschenkligen Dreiecks ist in radialer Richtung ausgerichtet. Der Querschnitt der Zähne 601-606 ist ferner derart ausgebildet, dass die durch die Zähne 601-606 ausgebildeten Arretierausnehmungen die gleiche Querschnittsgeometrie aufweisen wie die Zähne 601-606. Die Arretierelemente 611, 612, 613 weisen an ihren der Zahnscheibe 600 zugewandten Enden bzw. in ihren Bereichen angrenzend an diese Enden ebenfalls eine dreiecksförmige Geometrie auf. Insbesondere weisen die Arretierelemente 611, 612, 613 hier eine Geometrie auf, die ein Negativ der Ausnehmungen bilden, so dass die Arretierelemente mit diesen Bereichen im Wesentlichen vollständig in den Ausnehmungen angeordnet werden können.

Die Zähne 601-606 sind äquidistant voneinander beabstandet, so dass auch die Ausnehmungen äquidistant voneinander beabstandet sind. Die Arretierelemente 611, 612, 613 sind ebenfalls äquidistant voneinander beabstandet, wobei die Beabstandung zweier Arretierelemente ein nicht ganzzahliges Vielfaches eines Zahnspitzenabstands zweier benachbart angeordneter Zähne beträgt. Daher besteht in der Regel nicht die Möglichkeit, dass sich zwei Arretierelemente gleichzeitig in einer Eingriffsposition befinden.

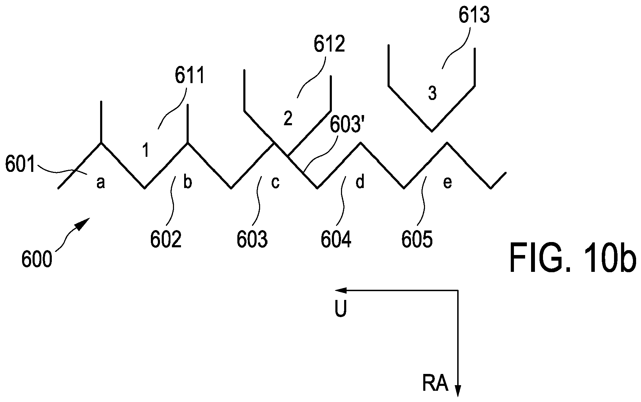

In Figur 10b befindet sich das erste Arretierelement 611 in einer Eingriffsposition zwischen dem ersten Zahn 601 und dem zweiten Zahn 602. Durch diese Anordnung ist die Zahnscheibe 600 an einer Rotation in Umfangsrichtung U gehindert. Das zweite Arretierelement 612 befindet sich in einer Position, die in radialer Richtung RA zwischen einer Eingriffsposition und einer Bereitschaftsposition angeordnet ist. In dieser Position tangiert das zweite Arretierelement 612 die dem zweiten Zahn 602 abgewandte Zahnflanke 603' des dritten Zahns 603. Das dritte Arretierelement 613 befindet sich weiterhin in einer Bereitschaftsposition.

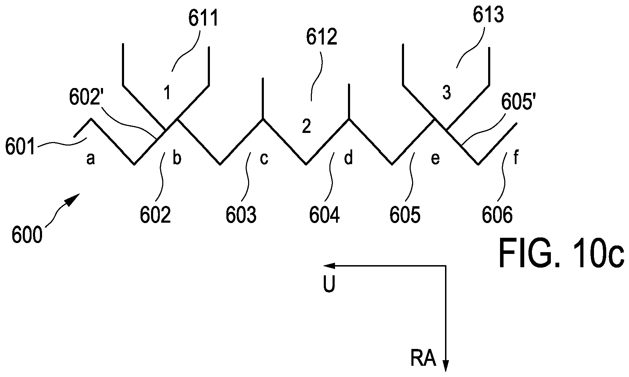

Von der in Figur 10b gezeigten Anordnung zu der in Figur 10c gezeigten Anordnung wurde das zweite Arretierelement 612 weiter in radialer Richtung bewegt und letztlich in eine Eingriffsposition bewegt. Damit das zweite Arretierelement 612 in die Eingriffsposition bewegt werden konnte, musste dieses eine Schwerbewegung an der Zahnflanke 603' ausüben und die Zahnscheibe 600 in Umfangsrichtung U in Richtung des ersten Arretierelements 611 bewegen. Damit dies erfolgen konnte, wurde das erste Arretierelement 611 entweder kraftlos geschaltet oder aktiv aus der Eingriffsposition zurückgezogen. Damit ein möglichst stabiler Zustand der Zahnscheibe 600 vorliegt, ist es besonders bevorzugt, dass das erste Arretierelement 611 aktiv derart zurückgezogen ist, dass dieses beim Zurückziehen kontinuierlich an einer dem ersten Zahn 601 zugewandten Zahnflanke 602' des zweiten Zahns 602 schert. Das dritte Arretierelement 613 befindet sich in einer Position, die in radialer Richtung RA zwischen einer Eingriffsposition und einer Bereitschaftsposition angeordnet ist. In dieser Position tangiert das dritte Arretierelement 613 die dem vierten Zahn 604 abgewandte Zahnflanke 605' des fünften Zahns 605.

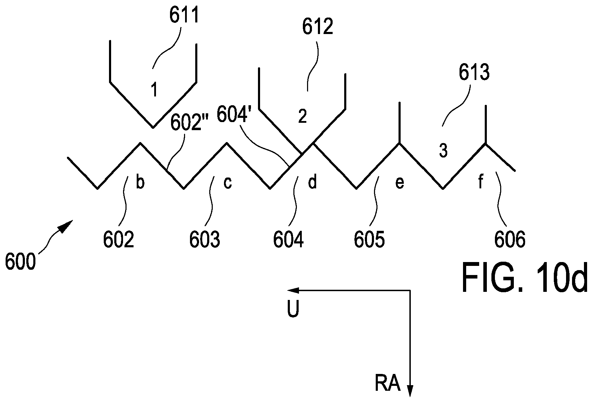

Von der in Figur 10c gezeigten Anordnung zu der in Figur 10d gezeigten Anordnung wurde das dritte Arretierelement 613 weiter in radialer Richtung bewegt und letztlich in eine Eingriffsposition bewegt. Damit das dritte Arretierelement 613 in die Eingriffsposition bewegt werden konnte, musste dieses eine Schwerbewegung an der Zahnflanke 605' ausüben und die Zahnscheibe 600 in Umfangsrichtung U in Richtung des zweiten Arretierelements 612 bewegen. Damit dies erfolgen konnte, wurde das zweite Arretierelement 612 entweder kraftlos geschaltet oder aktiv aus der Eingriffsposition zurückgezogen. Das erste Arretierelement 611 wurde in eine Bereitschaftsposition bewegt.

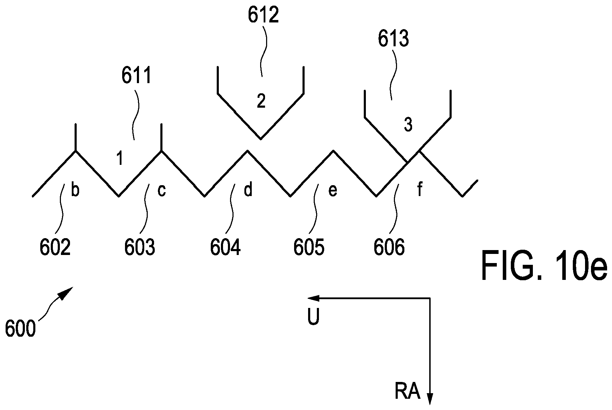

Von der in Figur 10d gezeigten Anordnung zu der in Figur 10e gezeigten Anordnung wurde das erste Arretierelement 611 von der zuletzt genannten Bereitschaftsposition wieder in eine Eingriffsposition gebracht und hat dabei eine Schwerbewegung an der dem dritten Zahn 603 zugewandten Zahnflanke 602" des zweiten Zahns 602 ausgeführt und somit die Zahnscheibe abermals in Umfangsrichtung U bewegt.

Die hier dargestellte Rotorarretiervorrichtung hat insbesondere wegen des beanspruchten Abstands A1 der Arretierelemente im Vergleich zum Zahnspitzenabstand Z den besonderen Vorteil, dass diese eine Zahnscheibe inkrementell in tangentialer Richtung drehen kann und somit auch den aerodynamischen Rotor einer Windenergieanlage mit kleinen Schritten drehen kann. Somit kann im Wesentlichen jede beliebige Positionierung des aerodynamischen Rotors erreicht werden. Darüber hinaus kann bei einer derartigen Positionierung darauf geachtet werden, dass insbesondere Positionen, die beispielsweise für Wartungs- und/oder Montage und/oder Demontageschritte wünschenswert sind, erreicht werden können. Darüber hinaus kann durch das Vorsehen einer Mehrzahl von Arretiermodulen 120, 130, 140, 25, 26, 27 die Möglichkeit geschaffen werden, dass die Zahnscheibe in eine erste Drehrichtung und in eine dieser entgegengesetzten zweiten Drehrichtung bewegt wird. Darüber hinaus wird durch die Geometrie der Arretierelemente, die eine Scherbewegung in der Verzahnung der Zahnscheibe verursachen, ein Verklemmen während der Arretierung vermieden werden. Somit ist auch eine verbesserte Lösbarkeit der Arretierung gewährleistet.

### BEZUGSZEICHEN

- 10: Rotorarretiervorrichtung
- 11: Zahnscheibe
- 12: Arretierausnehmung
- 14: Arretierausnehmung
- 16: Zahn
- 20: Generator
- 22: Generator-Stator
- 23: Statorscheibe
- 24: Generator-Rotor
- 25: erstes Arretiermodul
- 26: zweites Arretiermodul
- 27: drittes Arretiermodul
- 50, 50', 50": keilförmiges Arretierelement
- 52: Zahnscheibe mit keilförmiger Verzahnung
- 60: walzenförmiges Arretierelement
- 62: Zahnscheibe mit wellenförmiger Verzahnung
- 70: konusförmiges Arretierelement
- 72: Zahnscheibe mit konusförmiger Verzahnung
- 100: Windenergieanlage
- 102: Turm
- 104: Gondel
- 106: Rotor
- 108, 108': Rotorblatt
- 110: Spinner
- 120: erstes Arretiermodul
- 122: erste Arretierelemente
- 123: Eingriffsende
- 130: zweites Arretiermodul
- 132: zweite Arretierelemente
- 140: drittes Arretiermodul
- 142: dritte Arretierelemente
- 200, 200', 200": Zahnscheibe
- 202, 202', 202": Verzahnung
- 300, 300', 300": Zahnscheibe
- 302, 302', 302": Verzahnung
- 400, 400', 400": Zahnscheibe
- 402, 402', 402": Verzahnung
- 500: Zahnpaarung
- 501: Eingriffsbereich
- 520: Zahn
- 600: Zahnscheibe
- 601: erster Zahn
- 602: zweiter Zahn
- 602': dem ersten Zahn zugewandte Zahnflanke des zweiten Zahns
- 602": dem dritten Zahn zugewandte Zahnflanke des zweiten Zahns
- 603: dritter Zahn
- 603': dem zweiten Zahn abgewandte Zahnflanke des dritten Zahns
- 604: vierter Zahn
- 604': dem dritten Zahn zugewandte Zahnflanke des vierten Zahns
- 605: fünfter Zahn
- 605': dem vierten Zahn abgewandte Zahnflanke des fünften Zahns
- 606: sechster Zahn
- 611: erstes Arretierelement
- 612: zweites Arretierelement
- 613: drittes Arretierelement
- A1: Abstand Arretierelemente
- D1: erste Tangentialrichtung
- D2: zweite Tangentialrichtung
- R: Rotationsachse
- RA: radiale Richtung
- U: Umfangsrichtung
- Z: Zahnspitzenabstand

## Patentansprüche

1. Rotorarretiervorrichtung (10) für eine Windenergieanlage (100) mit einem Rotor (106), einer mit dem Rotor drehsteif verbundenen Rotationsbaugruppe und einer relativ zur Rotationsbaugruppe ortsfesten Standbaugruppe, umfassend
- eine an der Rotationsbaugruppe anordenbare Zahnscheibe (11, 52, 62, 72, 200, 200', 200", 300, 300', 300", 400, 400', 400"), mit einer entlang eines Umfangs angeordneten Mehrzahl an Arretierausnehmungen (12, 14), wobei zwei benachbarte Arretierausnehmungen einen Zahn (16, 520) ausbilden,
- ein erstes Arretiermodul (25, 120) mit mindestens einem ersten Arretierelement (122),
- ein zweites Arretiermodul (26, 130) mit mindestens einem zweiten Arretierelement (132),
- wobei das erste Arretiermodul und das zweite Arretiermodul an der Standbaugruppe anordenbar sind,
- wobei das erste Arretierelement und das zweite Arretierelement angeordnet und ausgebildet sind, in Arretierausnehmungen der Zahnscheibe einzugreifen, **dadurch gekennzeichnet, dass** in Umfangsrichtung der Zahnscheibe der Abstand (A1) des mindestens einen ersten Arretierelements von dem mindestens einen zweiten Arretierelement ein nicht ganzzahliges Vielfaches eines Zahnspitzenabstands (Z) der Zahnscheibe beträgt.

2. Rotorarretiervorrichtung (10) nach dem vorhergehenden Anspruch, wobei das mindestens eine erste Arretierelement (122) und/oder das mindestens eine zweite Arretierelement (132) einen Eingriffsbereich (501) aufweist bzw. aufweisen, und der Eingriffsbereich eine Negativgeometrie von einer der Arretierausnehmungen (12, 14) aufweist, so dass der Eingriffsbereich des ersten Arretierelements und/oder des zweiten Arretierelements vorzugsweise vollständig in einer der Arretierausnehmungen anordenbar ist bzw. sind.

3. Rotorarretiervorrichtung (10) nach mindestens einem der vorhergehenden Ansprüche, wobei die Breite der Arretierausnehmungen (12, 14) in Umfangsrichtung in radialer und/oder axialer Richtung von einem Kopfkreisdurchmesser zu einem Fußkreisdurchmesser hin abnimmt, wobei diese Abnahme vorzugsweise stetig erfolgt.

4. Rotorarretiervorrichtung (10) nach mindestens einem der vorhergehenden Ansprüche,
wobei die Arretierausnehmungen (12, 14) eine homogene Verzahnung (202, 202', 202",302, 302', 302",402, 402', 402") ausbilden, die insbesondere einen konstanten Zahnspitzenabstand (Z) aufweist, und/oder
wobei eine Zahnhöhe der Zähne (16, 520) der Zahnscheibe (11, 52, 62, 72, 200, 200', 200", 300, 300', 300", 400, 400', 400") parallel und/oder radial zur Rotationsachse (R) der Rotationsbaugruppe ausgerichtet ist.

5. Rotorarretiervorrichtung (10) nach mindestens einem der vorhergehenden Ansprüche, wobei das mindestens eine erste Arretierelement (122) beweglich an dem ersten Arretiermodul (25, 120) angeordnet ist und/oder das mindestens eine zweite Arretierelement (132) beweglich an dem zweiten Arretiermodul (26, 130) angeordnet ist.

6. Rotorarretiervorrichtung (10) nach mindestens einem der vorhergehenden Ansprüche, wobei das erste Arretiermodul (25, 120) und/oder das zweite Arretiermodul (26, 130) ausgebildet ist bzw. sind, das mindestens eine erste Arretierelement (122) und/oder das mindestens eine zweite Arretierelement (132) in Eingriffsrichtung von einer Bereitschaftsposition in eine Eingriffsposition zu bewegen, wobei vorzugsweise das mindestens eine erste Arretierelement und/oder das mindestens eine zweite Arretierelement in der Bereitschaftsposition nicht in eine der Arretierausnehmungen (12, 14) eingreift bzw. eingreifen und in der Eingriffsposition in eine der Arretierausnehmungen (12, 14) eingreift bzw. eingreifen.

7. Rotorarretiervorrichtung (10) nach mindestens einem der vorhergehenden Ansprüche, wobei die Eingriffsrichtung des mindestens einen ersten Arretierelements (122) und/oder des mindestens einen zweiten Arretierelements (132) in radialer Richtung und/oder in axialer Richtung einer Rotationsachse (R) der Rotationsbaugruppe gerichtet ist.

8. Rotorarretiervorrichtung (10) nach mindestens einem der vorhergehenden Ansprüche,
wobei das erste Arretiermodul (25, 120) und/oder das zweite Arretiermodul (26, 130) an einem Tragrahmen, und/oder einem Grundträger, und/oder einem Generator-Stator (22), insbesondere an einem Statorträger, und/oder einem Maschinenträger, und/oder einer Lagervorrichtung der Hauptwelle, anordenbar ist bzw. sind.

9. Rotorarretiervorrichtung (10) nach mindestens einem der vorhergehenden Ansprüche,
wobei die Zahnscheibe (11, 52, 62, 72, 200, 200', 200", 300, 300', 300", 400, 400', 400") an einem Generator-Rotor (24), und/oder einer Rotorscheibe, und/oder einer Hauptwelle, und/oder einer Antriebsseite eines Getriebes, und/oder einer Abtriebsseite eines Getriebes anordenbar ist.

10. Rotorarretiervorrichtung (10) nach mindestens einem der vorhergehenden Ansprüche, umfassend eine Steuerungsvorrichtung, die angeordnet und ausgebildet ist, das mindestens eine erste Arretierelement (122) in Eingriffsrichtung in die Eingriffsposition zu bewegen, so dass die Zahnscheibe (11, 52, 62, 72, 200, 200', 200", 300, 300', 300", 400, 400', 400") durch den Eingriff des mindestens einen ersten Arretierelements in eine der Arretierausnehmungen (12, 14) in mindestens einer Drehrichtung (D1), vorzugsweise in beide Drehrichtungen (D1, D2), arretiert wird.

11. Rotorarretiervorrichtung (10) nach mindestens einem der vorhergehenden Ansprüche, umfassend eine Steuerungsvorrichtung, die angeordnet und ausgebildet ist, das mindestens eine zweite Arretierelement (132) in Eingriffsrichtung in eine Eingriffsposition zu bewegen, wobei das mindestens eine erste Arretierelement (122) derart in eine Bereitschaftsposition bewegt wird, dass die Zahnscheibe (11, 52, 62, 72, 200, 200', 200", 300, 300', 300", 400, 400', 400") während der Bewegungen des ersten Arretierelements und des zweiten Arretierelements stets in beide Drehrichtungen (D1, D2) durch das erste Arretierelement und/oder das zweite Arretierelement arretiert ist.

12. Windenergieanlage (100) mit einer Gondel (104), einer Rotationsbaugruppe und einer Standbaugruppe, umfassend eine Rotorarretiervorrichtung (10) nach mindestens einem der vorhergehenden Ansprüche 1-11.

13. Verfahren zum Arretieren und/oder Drehen eines Rotors (106) einer Windenergieanlage (100), insbesondere einer Windenergieanlage gemäß Anspruch 12, umfassend
- Bereitstellen einer Rotorarretiervorrichtung (10) nach mindestens einem der Ansprüche 1-11,
- Bewegen des mindestens einen ersten Arretierelements (122), das angeordnet und ausgebildet ist, in eine Arretierausnehmung (12, 14) einer Zahnscheibe (11, 52, 62, 72, 200, 200', 200", 300, 300', 300", 400, 400', 400") einzugreifen, in Eingriffsrichtung in eine Eingriffsposition, so dass die Zahnscheibe durch den Eingriff des mindestens einen ersten Arretierelements in eine der Arretierausnehmungen in mindestens einer Drehrichtung (D1), vorzugsweise in beide Drehrichtungen (D1, D2), arretiert wird.

14. Verfahren gemäß dem vorhergehenden Anspruch,
umfassend
- Bewegen des mindestens einen zweiten Arretierelements (132), das angeordnet und ausgebildet ist, in eine der Arretierausnehmungen (12, 14) der Zahnscheibe (11, 52, 62, 72, 200, 200', 200", 300, 300', 300", 400, 400', 400") einzugreifen, in Eingriffsrichtung in eine Eingriffsposition, so dass die Zahnscheibe durch den Eingriff des mindestens einen zweiten Arretierelements in eine der Arretierausnehmungen in mindestens einer Drehrichtung (D1), vorzugsweise in beide Drehrichtungen (D1, D2), arretiert wird,
- Bewegen des mindestens einen ersten Arretierelements (122) in eine Bereitschaftsposition, in der das mindestens eine erste Arretierelement nicht in eine der Arretierausnehmungen der Zahnscheibe eingreift,
- wobei das Bewegen des ersten Arretierelements und das Bewegen des zweiten Arretierelements derart erfolgt, dass die Zahnscheibe während dieser Bewegungen in mindestens einer Drehrichtung (D1), vorzugsweise in beiden Drehrichtungen (D1, D2), arretiert ist.

15. Verfahren zum Arretieren und/oder Drehen eines Rotors (106) einer Windenergieanlage (100), insbesondere einer Windenergieanlage gemäß Anspruch 12, umfassend
- Bereitstellen einer Rotorarretiervorrichtung (10) nach mindestens einem der Ansprüche 1-11 mit einem dritten Arretiermodul mit einem dritten Arretierelement (613), wobei das erste Arretiermodul ein erstes Arretierelement (611) und das zweite Arretiermodul ein zweites Arretierelement (612) umfassen, wobei das zweite Arretierelement benachbart zum ersten Arretierelement und das dritte Arretierelement benachbart zum zweiten Arretierelement angeordnet ist, und wobei die Zahnscheibe (600) zumindest einen ersten Zahn (601), einen zu diesem benachbart angeordneten zweiten Zahn (602), einen zu diesem benachbart angeordneten dritten Zahn (603), einen zu diesem benachbart angeordneten vierten Zahn (604), einen zu diesem benachbart angeordneten fünften Zahn (605), und einen zu diesem benachbart angeordneten sechsten Zahn (606) umfasst,
- Bewegen des ersten Arretierelements (611) in eine Eingriffsposition zwischen dem ersten Zahn (601) und dem zweiten Zahn (602), und Bewegen des zweiten Arretierelements (612) an eine dem zweiten Zahn (602) abgewandte Zahnflanke (603') des dritten Zahns (603),
- Bewegen des zweiten Arretierelements (612) in eine Eingriffsposition zwischen dem dritten Zahn (603) und dem vierten Zahn (604), wobei das zweite Arretierelement (612) eine Schwerbewegung an der dem zweiten Zahn (602) abgewandten Zahnflanke (603') des dritten Zahns (603) ausführt, passives oder aktives Bewegen des ersten Arretierelements (611) an einer dem ersten Zahn (601) zugewandten Zahnflanke (602') des zweiten Zahns (602) und Bewegen des dritten Arretierelements (613) an eine dem vierten Zahn (604) abgewandten Zahnflanke (605') des fünften Zahns (605),
- Bewegen des dritten Arretierelements (613) in eine Eingriffsposition zwischen dem fünften Zahn (605) und dem sechsten Zahn (606), wobei das dritte Arretierelement (613) eine Schwerbewegung an der dem vierten Zahn (604) abgewandten Zahnflanke (605') des fünften Zahns (605) ausführt, passives oder aktives Bewegen des zweiten Arretierelements (612) an einer dem dritten Zahn (603) zugewandten Zahnflanke (604') des vierten Zahns (604) und Bewegen des ersten Arretierelements (611) in eine Bereitschaftsposition.

## Claims

1. A rotor arresting device (10) for a wind turbine (100) having a rotor (106), a rotational assembly connected in a torsionally rigid manner to the rotor, and a static assembly fixed in position relative to the rotational assembly, comprising
- a toothed disk (11, 52, 62, 72, 200, 200', 200", 300, 300', 300", 400, 400', 400"), which can be arranged on the rotational assembly, having a plurality of arresting recesses (12, 14) arranged along a circumference, wherein two adjacent arresting recesses form a tooth (16, 520),
- a first arresting module (25, 120) having at least one first arresting element (122),
- a second arresting module (26, 130) having at least one second arresting element (132),
- wherein the first arresting module and the second arresting module can be arranged on the static assembly,
- wherein the first arresting element and the second arresting element are arranged and designed to engage in arresting recesses of the toothed disk,
**characterized in that**
the spacing (A1) of the at least one first arresting element from the at least one second arresting element in the circumferential direction of the toothed disk is a non-integral multiple of a tooth tip spacing (Z) of the toothed disk.

2. The rotor arresting device (10) as claimed in the preceding claim, wherein the at least one first arresting element (122) and/or the at least one second arresting element (132) have/has an engagement region (501), and the engagement region has a negative geometry of one of the arresting recesses (12, 14), thus enabling the engagement region of the first arresting element and/or of the second arresting element to be arranged, preferably fully, in one of the arresting recesses.

3. The rotor arresting device (10) as claimed in at least one of the preceding claims, wherein the width of the arresting recesses (12, 14) in the circumferential direction decreases in the radial and/or axial direction from an addendum circle diameter to a root circle diameter, wherein this decrease preferably takes place continuously.

4. The rotor arresting device (10) as claimed in at least one of the preceding claims, wherein the arresting recesses (12, 14) form a uniform toothing (202, 202', 202", 302, 302', 302", 402, 402', 402"), which, in particular, has a constant tooth tip spacing (Z),
and/or
wherein a tooth height of the teeth (16, 520) of the toothed disk (11, 52, 62, 72, 200, 200', 200", 300, 300', 300", 400, 400', 400") is oriented parallel to and/or radially with respect to the axis of rotation (R) of the rotational assembly.

5. The rotor arresting device (10) as claimed in at least one of the preceding claims, wherein the at least one first arresting element (122) is arranged movably on the first arresting module (25, 120) and/or the at least one second arresting element (132) is arranged movably on the second arresting module (26, 130).

6. The rotor arresting device (10) as claimed in at least one of the preceding claims, wherein the first arresting module (25, 120) and/or the second arresting module (26, 130) are/is designed to move the at least one first arresting element (122) and/or the at least one second arresting element (132) in the engagement direction from a standby position into an engagement position, wherein the at least one first arresting element and/or the at least one second arresting element preferably do or does not engage in one of the arresting recesses (12, 14) in the standby position and engage or engages in one of the arresting recesses (12, 14) in the engagement position.

7. The rotor arresting device (10) as claimed in at least one of the preceding claims, wherein the engagement direction of the at least one first arresting element (122) and/or of the at least one second arresting element (132) is oriented in the radial direction and/or in the axial direction of an axis of rotation (R) of the rotational assembly.

8. The rotor arresting device (10) as claimed in at least one of the preceding claims, wherein the first arresting module (25, 120) and/or the second arresting module (26, 130) can be arranged on a support frame and/or on a base support and/or on a generator stator (22), in particular on a stator support, and/or on a machine support, and/or on a bearing device of the main shaft.

9. The rotor arresting device (10) as claimed in at least one of the preceding claims, wherein the toothed disk (11, 52, 62, 72, 200, 200', 200", 300, 300', 300", 400, 400', 400") can be arranged on a generator rotor (24) and/or on a rotor disk and/or on a main shaft and/or on an input side of a transmission and/or on an output side of a transmission.

10. The rotor arresting device (10) as claimed in at least one of the preceding claims, comprising a control device which is arranged and designed to move the at least one first arresting element (122) in the engagement direction into the engagement position, with the result that the toothed disk (11, 52, 62, 72, 200, 200', 200", 300, 300', 300", 400, 400', 400") is arrested in at least one direction of rotation (D1), preferably in both directions of rotation (D1, D2), by the engagement of the at least one first arresting element in one of the arresting recesses (12, 14).

11. The rotor arresting device (10) as claimed in at least one of the preceding claims, comprising a control device which is arranged and designed to move the at least one second arresting element (132) in the engagement direction into an engagement position, wherein the at least one first arresting element (122) is moved into a standby position in such a way that the toothed disk (11, 52, 62, 72, 200, 200', 200", 300, 300', 300", 400, 400', 400") is always arrested in both directions of rotation (D1, D2) by the first arresting element and/or the second arresting element during the movements of the first arresting element and the second arresting element.

12. A wind turbine (100) having a nacelle (104), a rotational assembly and a static assembly, comprising a rotor arresting device (10) as claimed in at least one of the preceding claims 1-11.

13. A method for arresting and/or rotating a rotor (106) of a wind turbine (100), in particular of a wind turbine as claimed in claim 12,
comprising
- providing a rotor arresting device (10) as claimed in at least one of claims 1-11,
- moving the at least one first arresting element (122), which is arranged and designed to engage in an arresting recess (12, 14) of a toothed disk (11, 52, 62, 72, 200, 200', 200", 300, 300', 300", 400, 400', 400"), in the engagement direction into an engagement position, with the result that the toothed disk is arrested in at least one direction of rotation (D1), preferably in both directions of rotation (D1, D2), by the engagement of the at least one first arresting element.

14. The method as claimed in the preceding claim,
comprising
- moving the at least one second arresting element (132), which is arranged and designed to engage in one of the arresting recesses (12, 14) of the toothed disk (11, 52, 62, 72, 200, 200', 200", 300, 300', 300", 400, 400', 400"), in the engagement direction into an engagement position, with the result that the toothed disk is arrested in at least one direction of rotation (D1), preferably in both directions of rotation (D1, D2), by the engagement of the at least one second arresting element,
- moving the at least one first arresting element (122) into a standby position, in which the at least one first arresting element does not engage in one of the arresting recesses of the toothed disk,
- wherein the movement of the first arresting element and the movement of the second arresting element takes place in such a way that the toothed disk is arrested in at least one direction of rotation (D1), preferably in both directions of rotation (D1, D2), during these movements.

15. A method for arresting and/or rotating a rotor (106) of a wind turbine (100), in particular of a wind turbine as claimed in claim 12,
comprising
- providing a rotor arresting device (10) as claimed in at least one of claims 1-11 having a third arresting module having a third arresting element (613), wherein the first arresting module comprises a first arresting element (611) and the second arresting module comprises a second arresting element (612), wherein the second arresting element is arranged adjacent to the first arresting element, and the third arresting element is arranged adjacent to the second arresting element, and wherein the toothed disk (600) comprises at least one first tooth (601), a second tooth (602) arranged adjacent to the first tooth, a third tooth (603) arranged adjacent to the second tooth, a fourth tooth (604) arranged adjacent to the third tooth, a fifth tooth (605) arranged adjacent to the fourth tooth, and a sixth tooth (606) arranged adjacent to the fifth tooth,
- moving the first arresting element (611) into an engagement position between the first tooth (601) and the second tooth (602), and moving the second arresting element (612) onto a tooth flank (603') of the third tooth (603) which faces away from the second tooth (602),
- moving the second arresting element (612) into an engagement position between the third tooth (603) and the fourth tooth (604), wherein the second arresting element (612) performs a shearing movement against the tooth flank (603') of the third tooth (603) which faces away from the second tooth (602), passively or actively moving the first arresting element (611) against a tooth flank (602') of the second tooth (602) which faces the first tooth (601) and moving the third arresting element (613) onto a tooth flank (605') of the fifth tooth (605) which faces away from the fourth tooth (604),
- moving the third arresting element (613) into an engagement position between the fifth tooth (605) and the sixth tooth (606), wherein the third arresting element (613) performs a shearing movement against the tooth flank (605') of the fifth tooth (605) which faces away from the fourth tooth (604), passively or actively moving the second arresting element (612) against a tooth flank (604') of the fourth tooth (604) which faces the third tooth (603) and moving the first arresting element (611) into a standby position.

## Revendications

1. Dispositif d'arrêt de rotor (10) pour une éolienne (100) avec un rotor (106), un bloc de rotation relié de manière rigide en torsion au rotor et un bloc support fixe par rapport au bloc de rotation, comprenant
- une roue dentée (11, 52, 62, 72, 200, 200', 200", 300, 300', 300", 400, 400', 400") pouvant être agencée au niveau du bloc de rotation, avec une pluralité d'évidements d'arrêt (12, 14) agencée le long d'une périphérie, dans lequel deux évidements d'arrêt contigus réalisent une dent (16, 520),
- un premier module d'arrêt (25, 120) avec au moins un premier élément d'arrêt (122),
- un deuxième module d'arrêt (26, 130) avec au moins un deuxième élément d'arrêt (132),
- dans lequel le premier module d'arrêt et le deuxième module d'arrêt peuvent être agencés au niveau du bloc support,
- dans lequel le premier élément d'arrêt et le deuxième élément d'arrêt sont agencés et réalisés afin de venir en prise dans des évidements d'arrêt de la roue dentée,
**caractérisé en ce que**
dans le sens périphérique de la roue dentée la distance (A1) entre l'au moins un premier élément d'arrêt et l'au moins un deuxième élément d'arrêt s'élève à un multiple non entier d'une distance de pointe dentée (Z) de la roue dentée.

2. Dispositif d'arrêt de rotor (10) selon la revendication précédente, dans lequel l'au moins un premier élément d'arrêt (122) et/ou l'au moins un deuxième élément d'arrêt (132) présente ou présentent une zone de mise en prise (501), et la zone de mise en prise présente une géométrie négative d'un des évidements d'arrêt (12, 14) de sorte que la zone de mise en prise du premier élément d'arrêt et/ou du deuxième élément d'arrêt puisse ou puissent être agencées de préférence complètement dans un des évidements d'arrêt.

3. Dispositif d'arrêt de rotor (10) selon au moins l'une des revendications précédentes, dans lequel la largeur des évidements d'arrêt (12, 14) diminue dans le sens périphérique dans le sens radial et/ou axial d'un diamètre circulaire de tête à un diamètre circulaire de pied, dans lequel cette diminution est effectuée de préférence en permanence.

4. Dispositif d'arrêt de rotor (10) selon au moins l'une des revendications précédentes, dans lequel les évidements d'arrêt (12, 14) réalisent une denture homogène (202, 202', 202", 302, 302', 302", 402, 402', 402") qui présente en particulier une distance de pointe dentée (Z) constante, et/ou
dans lequel une hauteur dentée des dents (16, 520) de la roue dentée (11, 52, 62, 72, 200, 200', 200", 300, 300', 300", 400, 400', 400") est orientée parallèlement et/ou radialement à l'axe de rotation (R) du bloc de rotation.

5. Dispositif d'arrêt de rotor (10) selon au moins l'une des revendications précédentes, dans lequel l'au moins un premier élément d'arrêt (122) est agencé de manière mobile au niveau du premier module d'arrêt (25, 120) et/ou l'au moins un deuxième élément d'arrêt (132) est agencé de manière mobile au niveau du deuxième module d'arrêt (26, 130).

6. Dispositif d'arrêt de rotor (10) selon au moins l'une des revendications précédentes, dans lequel le premier module d'arrêt (25, 120) et/ou le deuxième module d'arrêt (26, 130) est ou sont réalisés afin de déplacer l'au moins un premier élément d'arrêt (122) et/ou l'au moins un deuxième élément d'arrêt (132) dans le sens de mise en prise d'une position de mise à disposition à une position de mise en prise, dans lequel de préférence l'au moins un premier élément d'arrêt et/ou l'au moins un deuxième élément d'arrêt dans la position de mise en prise ne vient pas ou ne viennent pas en prise dans un des évidements d'arrêt (12, 14) et vient ou viennent en prise dans la position de mise en prise dans un des évidements d'arrêt (12, 14).

7. Dispositif d'arrêt de rotor (10) selon au moins l'une des revendications précédentes, dans lequel le sens de mise en prise de l'au moins un premier élément d'arrêt (122) et/ou de l'au moins un deuxième élément d'arrêt (132) est dirigé dans le sens radial et/ou dans le sens axial d'un axe de rotation (R) du bloc de rotation.

8. Dispositif d'arrêt de rotor (10) selon au moins l'une des revendications précédentes, dans lequel le premier module d'arrêt (25, 120) et/ou le deuxième module d'arrêt (26, 130) peut ou peuvent être agencés au niveau d'un cadre porteur, et/ou un support de base, et/ou un stator de générateur (22), en particulier au niveau d'un support de stator, et/ou un support de machine, et/ou un dispositif de palier de l'arbre principal.

9. Dispositif d'arrêt de rotor (10) selon au moins l'une des revendications précédentes,
dans lequel la roue dentée (11, 52, 62, 72, 200, 200', 200", 300, 300', 300", 400, 400', 400") peut être agencée au niveau d'un rotor de générateur (24), et/ou d'un disque de rotor, et/ou d'un arbre principal, et/ou d'un côté d'entraînement d'un engrenage, et/ou d'un côté de sortie d'un engrenage.

10. Dispositif d'arrêt de rotor (10) selon au moins l'une des revendications précédentes, comprenant un dispositif de commande qui est agencé et réalisé afin de déplacer l'au moins un premier élément d'arrêt (122) dans le sens de mise en prise dans la position de mise en prise de sorte que la roue dentée (11, 52, 62, 72, 200, 200', 200", 300, 300', 300", 400, 400', 400") soit arrêtée par la mise en prise de l'au moins un premier élément d'arrêt dans un des évidements d'arrêt (12, 14) dans au moins un sens de rotation (D1), de préférence dans les deux sens de rotation (D1, D2).

11. Dispositif d'arrêt de rotor (10) selon au moins l'une des revendications précédentes, comprenant un dispositif de commande qui est agencé et réalisé afin de déplacer l'au moins un deuxième élément d'arrêt (132) dans le sens de mise en prise dans une position de mise en prise, dans lequel l'au moins un premier élément d'arrêt (122) est déplacé dans une position de mise à disposition de telle manière que la roue dentée (11, 52, 62, 72, 200, 200', 200", 300, 300', 300", 400, 400', 400'') pendant les déplacements du premier élément d'arrêt et du deuxième élément d'arrêt soit toujours arrêtée dans les deux sens de rotation (D1, D2) par le premier élément d'arrêt et/ou le deuxième élément d'arrêt.

12. Éolienne (100) avec une nacelle (104), un bloc de rotation et un bloc support, comprenant un dispositif d'arrêt de rotor (10) selon au moins l'une des revendications précédentes 1 à 11.

13. Procédé d'arrêt et/ou de rotation d'un rotor (106) d'une éolienne (100), en particulier d'une éolienne selon la revendication 12, comprenant :
- la mise à disposition d'un dispositif d'arrêt de rotor (10) selon au moins l'une des revendications 1 à 11,
- le déplacement de l'au moins un premier élément d'arrêt (122) qui est agencé et réalisé afin de venir en prise dans un évidement d'arrêt (12, 14) d'une roue dentée (11, 52, 62, 72, 200, 200', 200", 300, 300', 300", 400, 400', 400") dans le sens de mise en prise dans une position de mise en prise de sorte que la roue dentée soit arrêtée par la mise en prise de l'au moins un premier élément d'arrêt dans un des évidements d'arrêt dans au moins un sens de rotation (D1), de préférence dans les deux sens de rotation (D1, D2).

14. Procédé selon la revendication précédente, comprenant :
- le déplacement de l'au moins un deuxième élément d'arrêt (132) qui est agencé et réalisé afin de venir en prise dans un des évidements d'arrêt (12, 14) de la roue dentée (11, 52, 62, 72, 200, 200', 200", 300, 300', 300", 400, 400', 400"), dans le sens de mise en prise dans une position de mise en prise de sorte que la roue dentée soit arrêtée par la mise en prise de l'au moins un deuxième élément d'arrêt dans un des évidements d'arrêt dans au moins un sens de rotation (D1), de préférence dans les deux sens de rotation (D1, D2),
- le déplacement de l'au moins un premier élément d'arrêt (122) dans une position de mise à disposition, dans laquelle l'au moins un premier élément d'arrêt ne vient pas en prise dans un des évidements d'arrêt de la roue dentée,
- dans lequel le déplacement du premier élément d'arrêt et le déplacement du deuxième élément d'arrêt sont effectués de telle manière que la roue dentée soit arrêtée pendant ces mouvements dans au moins un sens de rotation (D1), de préférence dans les deux sens de rotation (D1, D2).

15. Procédé d'arrêt et/ou de rotation d'un rotor (106) d'une éolienne (100), en particulier d'une éolienne selon la revendication 12, comprenant :
- la mise à disposition d'un dispositif d'arrêt de rotor (10) selon au moins l'une des revendications 1 à 11 avec un troisième module d'arrêt avec un troisième élément d'arrêt (613), dans lequel le premier module d'arrêt comporte un premier élément d'arrêt (611) et le deuxième module d'arrêt comporte un deuxième élément d'arrêt (612), dans lequel le deuxième élément d'arrêt est agencé de manière contiguë au premier élément d'arrêt et le troisième élément d'arrêt est agencé de manière contiguë au deuxième élément d'arrêt, et dans lequel la roue dentée (600) comporte au moins une première dent (601), une deuxième dent (602) agencée de manière contiguë à celle-ci, une troisième dent (603) agencée de manière contiguë à celle-ci, une quatrième dent (604) agencée de manière contiguë à celle-ci, une cinquième dent (605) agencée de manière contiguë à celle-ci, et une sixième dent (606) agencée de manière contiguë à celle-ci,
- le déplacement du premier élément d'arrêt (611) dans une position de mise en prise entre la première dent (601) et la deuxième dent (602), et le déplacement du deuxième élément d'arrêt (612) au niveau d'un flanc de dent (603'), éloigné de la deuxième dent (602), de la troisième dent (603),
- le déplacement du deuxième élément d'arrêt (612) dans une position de mise en prise entre la troisième dent (603) et la quatrième dent (604), dans lequel le deuxième élément d'arrêt (612) réalise un mouvement de cisaillement au niveau du flanc de dent (603'), éloigné de la deuxième dent (602), de la troisième dent (603), le déplacement passif ou actif du premier élément d'arrêt (611) au niveau d'un flanc de dent (602'), tourné vers la première dent (601), de la deuxième dent (602) et le déplacement du troisième élément d'arrêt (613) au niveau d'un flanc de dent (605'), éloigné de la quatrième dent (604), de la cinquième dent (605),
- le déplacement du troisième élément d'arrêt (613) dans une position de mise en prise entre la cinquième dent (605) et la sixième dent (606), dans lequel le troisième élément d'arrêt (613) réalise un mouvement de cisaillement au niveau du flanc de dent (605'), éloigné de la quatrième dent (604), de la cinquième dent (605), le déplacement passif ou actif du deuxième élément d'arrêt (612) au niveau d'un flanc de dent (604'), tourné vers la troisième dent (603), de la quatrième dent (604) et le déplacement du premier élément d'arrêt (611) dans une position de mise à disposition.
